(19) Europäisches Patentamt / European Patent Office / Office européen des brevets

(11) **EP 4 357 585 A1**

(12) **EUROPEAN PATENT APPLICATION**
published in accordance with Art. 153(4) EPC

(43) Date of publication:
**24.04.2024 Bulletin 2024/17**

(21) Application number: **22803538.2**

(22) Date of filing: **07.01.2022**

(51) International Patent Classification (IPC):
***E21B 49/00*** (2006.01)

(52) Cooperative Patent Classification (CPC):
**E21B 47/00; E21B 49/00**

(86) International application number:
**PCT/CN2022/070683**

(87) International publication number:
**WO 2022/242200 (24.11.2022 Gazette 2022/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.05.2021 CN 202110559076**

(71) Applicant: **PetroChina Company Limited**
**Dongcheng District**
**Beijing 100007 (CN)**

(72) Inventors:
• **YANG, Siyu**
**Beijing 100724 (CN)**
• **WANG, Yongjun**
**Beijing 100724 (CN)**
• **SUN, Yuanhui**
**Beijing 100724 (CN)**
• **LIU, Hui**
**Beijing 100724 (CN)**
• **CAO, Peng**
**Beijing 100724 (CN)**
• **DU, Zhengxue**
**Beijing 100724 (CN)**

(74) Representative: **Atout PI Laplace**
**Immeuble "Visium"**
**22, avenue Aristide Briand**
**94117 Arcueil Cedex (FR)**

(54) **METHOD AND APPARATUS FOR IDENTIFYING HIGH PERMEABILITY STREAKS IN MARINE CARBONATE ROCK BIOCLASTIC LIMESTONE OIL RESERVOIR**

(57) A method and apparatus for identifying high permeability streaks in a marine carbonate rock bioclastic limestone oil reservoir. The method comprises: determining single-layer dynamic permeability and a single-layer specific liquid production index of a single-well flow unit according to well test data and production logging data; according to the production logging data, analyzing the interlayer interference of multi-layer commingled production, and comprehensively using the single-layer production in the production logging data and the single-layer dynamic permeability and the single-layer specific liquid production index of the single-well flow unit to establish a high permeability streak dynamic standard, and picking single-well high permeability streaks; in a coring well, according to the research results of stratigraphic sequence, lithofacies, sedimentary facies, and petrophysical facies, classifying the genetic types of high permeability reservoirs, and determining the distribution pattern of the high permeability streaks in the lithofacies, the sedimentary facies, and a sequence boundary; and establishing a high permeability streak logging identification mode, and identifying the high permeability streaks well by well in the entire oil reservoir according to the high permeability streak logging identification mode to achieve logging interpretation of the entire oil reservoir.

EP 4 357 585 A1

FIG.16a

**Description**

Field of Technology

The present invention relates to a method and apparatus for identifying high permeability streaks in a marine carbonate rock bioclastic limestone oil reservoir, and belongs to the technical field of oil reservoir heterogeneity evaluation in the field of oil and gas field exploration and development.

Background Art

A high permeability streak is also known as a hyperpermeability streak, abbreviated as HPS. According to O. M. Adeoye (SPE-177824), it is a manifestation of oil reservoir heterogeneity due to relatively high permeability reservoir stratums, and is also the cause of water-driven leading-edge advancement and inhomogeneous advancement leading to loss of control in some wells due to increased water cut. Therefore, in the development of marine carbonate oil reservoirs with very strong heterogeneity, it is very important to clarify the causes, types, and distributions of high permeability streak for deploying high-production development wells, designing injection-production well networks, improving the oil displacement efficiency by water injection, extending the production period of no or low water cut, and improving the well efficiency factor.

There is a wealth of research related to high permeability streak, and the present invention differs in the following ways:

1. Different research objects. Most of the published literature focuses on the internationally widely used "Thief zone" and "Super-K", which are thin layers with abnormally high permeability, usually formed by erosion of the leaching surface and high-energy deposition of coarse-grained lithologies (e.g., oolitic limestone) and fracture corridors. It is the most conductive corridor that leads to early water production, rapid rise in water cut, low oil displacement efficiency and low oil recovery in oilfields. The high permeability streak proposed by the present invention includes both the "Thief zone" and "Super-K", as well as high permeability streak deposited in high energy bioclastic limestone which is different from typical oolitic limestone. Practical research has proved that in porous carbonate oil reservoirs, the "Thief zone" and "Super-K" are controlled by stratigraphic sequence, and are mostly developed near the 3rd order sequences or the local exposure surface, and the abnormal high-energy depositional zones which are obviously different from the normal sediment. Their distribution is regular and they are easy to be recognized and managed, and their influence on water injection development and management is relatively small. In contrast, a large number of high-energy depositional high permeability streak developed within the bioclastic limestone are controlled by sedimentation with poor distribution regularity, and difficult to recognize, and they have a great impact on water injection effect and development management.

2. Different research content. There have been relatively in-depth researches on the geological genesis, identification, characterization and application of Thief zone and Super-K in the published literatures (e.g., SPE-64989, IPTC-16632, SEG-2008-3184, WPC-30164, and Chinese Patent CN106121641A, etc.), among which the identification of Thief zone or Super-K is mainly focused on single-discipline identification including the geological, logging, seismic and dynamic method etc., and the identification results have a certain compliance rate but the application is limited due to the method. Some of literatures related to high permeability streak (HPS) mainly focus on the establishment of geological models based on field outcrops, cores, logging and geological analysis to reveal and characterize the spatial distribution of HPS (e.g. IPTC-13385); some of the literatures mainly focus on analyzing the dynamic characteristics of HPS zones, tracking the direction of HPS zones with tracers, and realizing the overall management and application of horizontal well injection development technology (e.g., SPE-31149, SPE-176110, etc.). At present, the published patent literatures relating to high permeability streaks involve core experiments of high permeability streak (e.g., Chinese Patent CN108535161A), dynamic identification and monitoring (e.g., Chinese Patent CN110821485A), and calculation of physical property parameters of superior flowing channels (e.g., Chinese Patent CN110821486A), and other aspects, but there are no reports on static-dynamic integrated identification so far.

Aiming at the current research situation of high permeability streak and the difficulties faced by the development of bioclastic limestone oil reservoirs, the innovative provision of a set of static-dynamic integrated method and apparatus for identifying high permeability streaks in a marine carbonate rock bioclastic limestone oil reservoir is not only the urgent need for production, but also the key to improve the connotation of HPS zone research and the management level of water injection development.

Description of references cited in the background art:

1) Description of journal name abbreviations:

Society of Petroleum Engineers is abbreviated as SPE;
International Petroleum Technology Conference is abbreviated as IPTC;
Society of Exploration Geophysicists International Exhibition and Annual Meeting is abbreviated as SEG;
World Petroleum Council is abbreviated as WPC;

2) Detailed description of references:

SPE-177824: O. M. Adeoye, etc. Integrated Evaluation Approach and Implications of High permeability streaks in Giant Carbonate OilField. 2015.11;
SPE-64989: M.H. Alqam, etc. Treatment of Super-K Zones Using Gelling Polymers. 2001.02;
IPTC-16632: Diah Agustina, etc. Drilling with Casing Technique Successfully Overcome Massive Thief Zone. 2013.03;
SEG-2008-3184: Alexandre W. Araman, etc. Thief Zone Identification Through Seismic Monitoring of a CO2 Flood, Weyburn Field, Saskatchewan. 2008;
WPC-30164: C. Ravenne, etc. Characterisation of Oil Reservoir Heterogeneities and Super Permeability Thief Zones in a Major Oilfield in The Middle East. 2000;
IPTC-13385: Agus Sudarsana, etc. High permeability streak Characterisations in Middle East Carbonate. 2009.12;
SPE-31149: P. valko. Performance of Fractured Horizontal Wells in High-Permeability Reservoirs. 1996.01;
SPE-176110: Hu Dandan, etc. Integrated management and Application of Horizontal Well Water Flooding Technology in a Large-scale Complicated Carbonate Oilfield Containing High permeability streak. 2015.08.

Summary of the invention

In order to solve the above mentioned drawbacks and deficiencies, one object of the present invention is to provide a method for identifying high permeability streaks in a marine carbonate rock bioclastic limestone oil reservoir.
Another object of the present invention is to provide an apparatus for identifying high permeability streaks in a marine carbonate rock bioclastic limestone oil reservoir.
In another aspect, the present invention also provides a computer apparatus.
In yet another aspect, the present invention also provides a computer readable storage medium. The present invention solves a problem of water breakthrough order and injection-production management of injection-production well groups within a strongly heterogeneous bioclastic limestone oil reservoir, and provides technical support for efficient development and balanced production of the oil reservoir and improvement of the final recovery rate.
In order to realize the above purpose, in an aspect, the present invention provides a method for identifying high permeability streaks in a marine carbonate rock bioclastic limestone oil reservoir, wherein the method comprises:

determining a single-layer dynamic permeability and a single-layer specific liquid productivity index of a single-well flow unit based on well test information and production logging information;
analyzing the interlayer interference in the multi-layer commingled production based on the production logging information, establishing a high permeability streak dynamic standard by integrating the single-layer yield in the production logging information and the single-layer dynamic permeability and the single-layer specific liquid productivity index of the single-well flow unit, and picking the high permeability streaks in a single well;
classifying the genetic types of the high permeability reservoir stratum (high permeability layer) in the cored wells based on the results obtained from the study of stratigraphic sequences, lithofacies, sedimentary facies and petrophysical facies, and determining the distribution pattern of the high permeability streaks in the lithofacies, the sedimentary facies and the stratigraphic interface;
establishing a high permeability streak logging identification mode, identifying high permeability streak on an oil reservoir-wide basis well by well according to the high permeability streak logging identification mode, and realizing oil reservoir-wide logging interpretation.

In the present invention, the single-well flow unit refers to a reservoir stratum with similar fluid flow characteristics formed along a certain pathway under certain production conditions (production differential pressure), which is manifested as a single well having a certain amount of liquid production in the longitudinal direction.
As a specific embodiment of the above-described method of the present invention, wherein the well test information is PBU information, and the production logging information is PLT test information.
As a specific embodiment of the above-described method of the present invention, wherein a single-layer specific liquid productivity index (SPI) is determined based on well test information and production logging information according to the following Equation (1):

$$SPI = \frac{q_o}{\Delta P \times h} \qquad \text{Equation (1);}$$

in Equation (1), SPI is the specific liquid productivity index in bbl/(d.psi.m); $q_o$ is the daily liquid productivity in bbl/d; $\Delta P$ is the bottom hole pressure difference (production differential pressure) in psi; and h is the thickness of the liquid-producing layer in m.

In Equation (1) of the present invention, it is necessary to determine the bottom hole pressure difference (production pressure difference) $\Delta P$ using well test information.

In the present invention, specific liquid productivity index (SPI), also known as liquid productivity index per meter, is an important parameter reflecting the productivity of the flow unit, and is defined as the daily liquid production per unit of thickness and per unit of production differential pressure.

As a specific embodiment of the above-described method of the present invention, wherein for the case of a single-layer well test, when the well test information is PBU information, the determination of the single-layer dynamic permeability (K_PBU) of the single-well flow unit based on the PBU information comprises:

1) determining the formation coefficient of this single well based on the interpretation of the PBU information in accordance with equation (2) below;

$$kh = \frac{q\mu}{4\pi m} \qquad \text{Equation (2);}$$

in Equation (2): $kh$ is the formation coefficient of the single well interpreted by the PBU data in mD·m; $q$ is the PBU test yield in m³/ks; $\mu$ is the liquid viscosity in mPa·s; $m$ is the slope of the Horner curve used in the interpretation of the PBU information, with no factor; $h$ is the thickness of the flow unit (usually the thickness of the effective reservoir with the fluid flow capability within the perforation section of the well test) in m; and $k$ is the single-layer dynamic permeability of the single-well flow unit in mD;

2) determining the thickness of the flow unit on the logging curve, and then dividing the formation coefficient of the single well by the thickness of the flow unit to obtain the single-layer dynamic permeability of the single-well flow unit;

for the case of a commingled-production well test, when the well test information is PBU information and the production logging information is PLT test information, the determination of the single-layer dynamic permeability (K_PBU) of the single-well flow unit based on the PBU information and the PLT test information comprises:

1) determining the integrated formation coefficient (i.e., the sum of the formation coefficients of all the flow units) of the single well based on the interpretation of the PBU data in accordance with Equation (2) above;

2) dividing the integrated formation coefficient of the single well into each flow unit using the stratified liquid productivity from the PLT test information in accordance with the following Equation (3)-Equation (5), to obtain the single-layer formation coefficient of each flow unit;

$$q_t = q_1 + q_2 + q_3 + \cdots + q_l \qquad \text{Equation (3);}$$

$$ratio_l = \frac{q_l}{q_t} \qquad \text{Equation (4);}$$

$$(kh)_l = (kh) \times ration_l \qquad \text{Equation (5);}$$

in Equation (3)-Equation (5), $q_t$ is the cumulative liquid production in PLT test information in bbl/d; $q_1$, $q_2$, $q_3$, ......$q_l$ are the actual liquid production of different liquid-producing sections in PLT test information, respectively, in bbl/d; $ration_l$ is the ratio of the actual liquid production in different liquid-producing sections in PLT test information to the cumulative liquid production in PLT test information, in units of no factor; $kh$ is the formation coefficient interpreted by PBU data, i.e., the integrated formation coefficient of this single well in mD·m; and $(kh)_l$ is the single-layer formation coefficient of each flow unit in mD-m;

3) then determining the single-layer dynamic permeability of each flow unit of the single wall based on the single-layer formation coefficient of each flow unit and the thickness of each flow unit in accordance with Equation (6) below;

$$k_l = \frac{(kh)_l}{h_l} \qquad\qquad \text{Equation (6);}$$

in Equation (6), $k_l$ is the single-layer dynamic permeability of the flow unit in mD; $(kh)_l$ is the single-layer formation coefficient of each flow unit in mD·m; $h_l$ is the actual thickness of the liquid-producing section of the flow unit in the PLT test information in m; and $l$ is the number of sections in the actual liquid-producing section in the PLT test information and is a positive integer.

Typically, the object studied by the present invention is an oil layer, and thus the liquid viscosity $\mu$ in Equation (2) is generally the viscosity of the oil under subsurface conditions.

As a specific embodiment of the above-described method of the present invention, wherein for the case of a single-layer well test, when the well test information is PBU information, and when determining the single-layer dynamic permeability of the single-well flow unit based on the PBU information, the thickness of the flow unit is determined as the thickness of the flow unit h using a single-layer PBU test on a logging curve, specifically by: based on the thickness of the perforation section h1, deducting the thickness of the baffles h2 by using the logging curve, and then determine the thickness of the flow unit h after correction for well inclination.

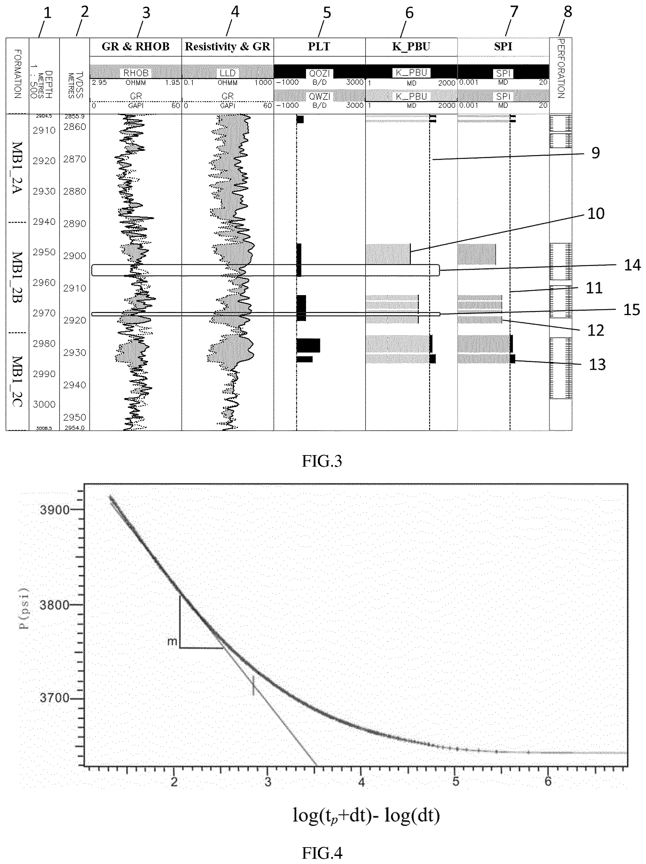

Seen as such, for the case of a single-layer well test (single-layer PBU test), the formation coefficient $kh$ of the layer can be obtained from the interpretation of the PBU information obtained from the PBU test, and the dynamic permeability of the layer can be determined by combining with the thickness of the flow unit (which is usually the thickness of the relatively good and effective reservoir within the perforation section), h; wherein the obtaining of $kh$ relies on the Horner curve used in the interpretation of the PBU information, and the curve shown in Figure 4 is Horner curve for pressure buliding up (PBU)test of Well X in an oilfield in the Middle East in an embodiment of the present invention, where $tp$ in Figure 4 is the production time of the well before the PBU test in ks, and dt is the time of PBU test of the well in ks.

However, for commingled-production wells, the $kh$ obtained from the interpretation of PBU information is the integrated formation coefficient of all the flow units of the well, and the dynamic permeability of different flow units can be determined only by dividing the $kh$ into each flow unit in conjunction with the PLT test information; therefore, the simultaneous availability of both the well test information and the production logging information is a necessary condition for the interpretation of reservoir parameters of the commingled- production wells.

According to the oil and gas industry standard of the People's Republic of China "Technical specification for oilfield well test" (SY/T 6172-2006), the well test information mentioned in the present invention is a specialized test information obtained for oil and water wells for determining the oil reservoir pressure, formation temperature and flow pressure, as well as the productivity of a single well, studying reservoir parameters, detecting oil, gas and water layers and their interconnections, and monitoring the dynamics of the reservoir. Among them, PBU, also known as PBU test, is a kind of unstable well test, and the information obtained from the PBU test becomes PBU information.

In the present invention, the production logging information is data such as liquid density, water holdup, temperature, pressure, yield and the like of the producing section(interval) measured in the casing, which can be used to to directly determine the difference in productivity of different layers under the same production conditions. Among them, PLT is a logging instrument produced by Schlumberger, which is mainly used to measure the actual liquid output of different perforation sections and to identify and differentiate between oil, water and gas production, and to quantify the ability of different perforation sections to supply liquids under the conditions of a certain working regime. The production logging information obtained from PLT is called PLT test information.

As a specific embodiment of the above-described method of the present invention, wherein determining the thickness of the flow unit comprises:
deducting the internal baffles and barrires of the unit using the logging curve inside the flow unit shown in the PLT test information; and then correcting the thickness of the flow unit to the plumb depth by well trajectory calculation, to obtain the thickness of the flow unit.

As a specific embodiment of the above-described method of the present invention, wherein analyzing the interlayer interference in the multi-layer commingled production based on the production logging information comprises:
analyzing the production suppression and interference situation of the possible high-productivity layer on the relatively poor reservoir based on the production logging information (e.g., PLT test information).

In the present invention, interlayer interference is defined as the phenomenon that interlayer liquid flow interferes with each other due to the differences in permeability, liquid properties and pressure among the sub-layers in the oil and gas producing layers, usually the flow unit with the best productivity interferes with the flow unit with a relatively poorer productivity, which is mostly determined by the unstable well test and dynamic logging.

For commingled-production wells, reservoirs with better physical properties and higher pressures contribute more to liquid production in PLT test. When the overall liquid production is large, reservoirs with poorer physical properties and lower pressures are unable to fully release their liquid productivity, which liquid production is lower than the actual productivity. Therefore, a comprehensive comparison of the matching degrees of reservoir properties, formation pressures, and PLT production of different perforation sections can be used to judge the obvious phenomenon of interlayer interference.

In the present invention, when it is determined that an interlayer interference exists in a certain flow unit, indicating that its production data and calculated dynamic permeability fail to reflect its true productivity, and if other wells have a layer (denoted as layer B) with the same reservoir characteristics as the layer (denoted as layer A) that the interlayer interference exists as described above and layer B is not affected by the interlayer interference under the same production conditions, at this time, the dynamic permeability of layer B can be calibrated as a dynamic permeability representative of a single-layer having similar reservoir characteristics, and the dynamic permeability data of layer A is treated as unreliable data and is not brought into the database for the next operation step.

As a specific embodiment of the above-described method of the present invention, wherein establishing a high permeability streak dynamic standard by integrating the single-layer yield in the production logging information and the single-layer dynamic permeability and the single-layer specific liquid productivity index of the single-well flow unit comprises:

establishing a scatter point intersection plot of the single-layer dynamic permeability and the single-layer specific liquid productivity index of the single-well flow unit, analyzing the productivity of the flow unit, i.e., the trend of the specific liquid productivity index as a function of the dynamic permeability and determining an inflection point, and determining the dynamic permeability and the liquid productivity index corresponding to the inflection point as a dynamic identification criteria for the high permeability streaks in a marine carbonate rock bioclastic limestone oil reservoir.

As a specific embodiment of the above-described method of the present invention, wherein picking the high permeability streaks in a single well comprises: picking the high permeability streaks in the single well in a stratified manner according to the dynamic identification criteria, specifically comprising:

on basis of deducting the internal baffles and barrires of the flow unit, drawing rectangular curves of the dynamic permeability and the specific liquid productivity index respectively using the data of the single-layer dynamic permeability and the single-layer specific liquid productivity index of the single-well flow unit determined by sections, and setting the single-layer dynamic permeability and the single-layer specific liquid productivity index in the dynamic standard of the high permeability streak as the baseline of the rectangular curves and filling them from the right side of the baseline to the rectangular curves; and when both the dynamic permeability and the specific liquid productivity index of this single layer are greater than the dynamic permeability and the specific liquid productivity index corresponding to the baseline of the rectangular curve, the single layer is determined to be a high permeability streak.

In the present invention, picking high permeability streaks in the single well by layers according to the dynamic identification criteria may provide a sample for establishing an identification mode extended to the whole oil reservoir.

In the present invention, the study of stratigraphic sequences comprises: based on the theory of stratigraphic sequence in which sea level change controls the formation and development of stratigraphic sequences, establishing a hierarchical marine stratigraphy division scheme based on petrographic cycle and seismic sequence structures, and generalizing it to the whole oil reservoir by means of the well logging curve of the single well and the three-dimensional seismic volume.

In the present invention, the study of lithofacies comprises: classifying the lithofacies according to the particle structure of carbonate rock and according to the Dunham scheme; in cored wells, classifying the lithofacies according to core observation and thin-section analysis, calibrating the logging curve, and establishing identification criteria; and in non-cored wells, utilizing logging curves to identify the lithofacies, so as to generalize it to the entire oil reservoir.

In the present invention, the study of sedimentary facies comprises: determining the depositional environment of an oil reservoir based on a regional geological background and establishing a depositional mode; in cored wells, analyzing depositional features based on the core and thin-section analysis, classifying sedimentary microfacies, calibtaring the logging curve, and establishing a model for identifying sedimentary microfacies; and, in non-cored wells, utilizing logging curves for identifying sedimentary microfacies by features such as morphology, combination, and longitudinal rhythmic changes, so as to generalize it to the entire oil reservoir.

In the present invention, the study of petrophysical facies comprises: classifying the carbonate reservoir stratums into four levels of high porosity ($\geq$20%), medium porosity (12%-20%), low porosity (4%-12%), and very low porosity (<4%) according to the China's petroleum and natural gas industry standard "Oil and gas reservoir evaluation method" (SY/T 6285-1997), and four levels of high permeability ($\geq$100 mD), medium permeability (10-100 mD), low permeability (1-10 mD), and very low permeability (<1 mD) according to the core permeability.

Considering that the porosity and permeability grading standards of different oilfields may not be completely consistent with the national standards due to differences in oil reservoir and reservoir stratum genesis, in the present invention, the porosity and permeability grading standards can be determined by using the scatter point intersection plot of porosity and permeability constrained by the main control factors of the reservoir (e.g., sedimentary microfacies) based on the physical property experiments of standard cores from the cored wells.

As a specific embodiment of the above-described method of the present invention, wherein classifying the genetic types of the high permeability reservoir stratum based on the study results of stratigraphic sequences, lithofacies, sedimentary facies and petrophysical facies and determining the distribution pattern of the high permeability streaks in the lithofacies, the sedimentary facies and the stratigraphic interface comprises:

by utilizing the petrophysical facies classification of the high permeability reservoir stratum or the single well high permeability streak data from cored wells, analyzing the types of lithofacies and sedimentary facies in which the high permeability reservoir stratum or high permeability streak is developed by means of a scatter point intersection plot or a frequency histogram; and at the same time, in conjunction with the results of the classification of the sedimentary microfacies and stratigraphic sequences, analyzing the location of the high permeability streaks in the sedimentary facies and stratigraphic sequences, to provide constraints of regularities for the identification of the high permeability streak using the logging information.

In the present invention, "by utilizing the petrophysical facies classification of the high permeability reservoir stratum or the single well high permeability streak data from the cored wells, analyzing the types of lithofacies and sedimentary facies in which the high permeability reservoir stratum or high permeability streak is developed by means of a scatter point intersection plot or a frequency histogram" involves two acquisition routes, i.e. a static route and a dynamic route. Specifically, for the porosity and permeability of small core samples with diameter about 1 cm obtained by core testing versus the fluid flow capability and dynamic permeability in the range of up to tens to hundreds of meters around the PBU and PLT test wells, they have same trends but quite different specific values. The most reliable way is to perform this work in wells that have cores, PBU and PLT testing, but generally there are few cored wells (at high cost) and there are many PBU and PLT testing wells, and there are very few wells that have both cores and testing of PBU and PLT. Therefore, utilizing the consistency of the these two and conducting the work in two ways: the first one is to utilize the core experimental data to classify high, medium and low permeability reservoir stratums according to the industry standard (SY/T 6285-1997), and then reveal the distribution law based on the results of stratigraphic sequences, lithofacies and sedimentary facies established by the core, the advantage of which is that the data are all from the core, with a good match and a good comparison between the samples with high permeability and the samples with medium and low permeability; the second one is to establish the correspondence by utilizing the high permeability streak determined by PBU and PLT and the stratigraphic sequences, lithofacies and sedimentary facies identified by the logging curve, which is slightly insufficient in terms of data reliability and consistency of different attributes since the data come from the logging interpretation. In the present invention, it is preferred to utilize the first way to determine the distribution pattern of the high permeability streaks in the lithofacies, sedimentary facies and stratigraphic interface, wherein the high permeability reservoir stratum comes from the core analysis data which is consistent with the trend of the dynamic data.

As a specific embodiment of the above-described method of the present invention, wherein classifying the genetic types of the high permeability reservoir stratum based on the study results of stratigraphic sequences, lithofacies, sedimentary facies and petrophysical facies and determining the distribution pattern of the high permeability streaks in the lithofacies, the sedimentary facies and the stratigraphic interface, specifically comprises:

utilizing the geological research results of the cored wells to pick the classification results of stratigraphic sequences, sedimentary facies and lithofacies of the single well;
utilizing the experimental data of petrophysical properties of cored wells, in conjunction with the research results of geological facies, establishing the classification standard of petrophysical facies and picking the petrophysical facies in cored wells;
utilizing the sedimentary facies, lithofacies and petrophysical facies to classify the genetic types of the high permeability streak, so as to serve the foundation for revealing the distribution pattern of the high permeability streak;
comprehensively analyzing the distribution pattern of the high permeability streaks in the lithofacies, sedimentary facies and stratigraphic interface.

As a specific embodiment of the above-described method of the present invention, wherein establishing a high permeability streak logging identification mode comprises:

taking a single well production logging test section (if a PLT test has been conducted, the test section here is the PLT test section) as a sample and taking the single-layer dynamic permeability and the single-layer specific liquid productivity index corresponding to the dynamic standard of the high permeability streak as boundaries, analyzing the logging response characteristics of the high permeability streak and non-high permeability streak, and establishing a qualitative identification mode in logging facies for high permeability streak and a quantitative identification mode in conventional logging for sedimentary high permeability streak;
wherein, if the single-layer dynamic permeability corresponding to the high permeability streak dynamic standard is $\alpha$, then the intervals with dynamic permeability $\geq a$ corresponds to a high permeability streak, and the intervals with dynamic permeability $<a$ corresponds to a non-high permeability streak.

As a specific embodiment of the above-described method of the present invention, wherein establishing a qualitative identification mode in logging facies for high permeability streak comprises:
analyzing the difference between the high permeability streak and the non-high permeability streak in term of the conventional logging curve, the FMI image logging, and the nuclear magnetic logging T2 spectrum, and establishing the qualitative identification mode in logging facies for high permeability streaks in the sedimentary reservoir stratum and the karst reservoir stratum, respectively, based on the results obtained from the analysis.

As a specific embodiment of the above-described method of the present invention, wherein in the sedimentary reservoir stratum, the high permeability streaks are mostly developed in high-energy depositional environments, and most of them belong to the pore-type high permeability streaks with pure lithology, coarse grain size, high porosity and high permeability; the conventional logging curve shows low gamma, high porosity, and high resistivity; the FMI image is light-colored, with a regular or irregular distribution of black patches, showing intergranular pores or development of larger dissolved pores; the nuclear magnetic logging T2 spectrum shows that the T2 values are characterized by double or multiple peaks, and the T2 time and energy spectrum peaks show high values;

in the karst reservoir stratum, the high permeability streaks are thin, with non-obvious conventional logging features but high productivity, and most of them show the characteristics of "thief zone"; FMI image shows the development of sinusoidal over-well fractures or irregular microfractures, and caverns or large dissolved pores in some wells; the nuclear magnetic logging T2 spectrum shows double peaks or multiple peaks, with medium or low T2 time and energy spectrum peaks, and the high permeability streak developing caverns or large dissolved pores shows high T2 values;
wherein, a person skilled in the art may reasonably determine the degree corresponding to a certain parameter, such as coarse or fine grain size, low gamma or high gamma, high or low resistivity, high or low porosity, or the like, based on the actual situation of the target oil field and in conjunction with the normal distribution of this parameter in the oil field.

As a specific embodiment of the above-described method of the present invention, wherein establishing a quantitative identification mode in conventional logging for sedimentary high permeability streak comprises:
in the production logging test section (if a PLT test has been conducted, the test section here is the test section of PLT test), according to the principle of superior fluid flow channel, subtracting obvious non-permeable baffles and barrires and low-permeability reservoir stratums (high gamma, high-density, low-resistivity and low-Am layers in the oil reservoirs), obtaining logging curve values according to conventional logging curve sampling interval in sections; producing a scatter point intersection plot of double logging curve classification according to the dynamic permeability distribution interval; and analyzing the distribution pattern of the logging curve values and identification limits (including the upper limit or the lower limit) of the high permeability streaks in conjunction with the geological regularities, thereby establishing a quantitative identification mode in conventional logging for sedimentary high permeability streak.

Wherein, the scatter point intersection plot of double logging curve classification includes the scatter point intersection plot of any two of all logging curves, for example, a scatter point intersection plot of the porosity curve value-resistivity curve value and a scatter point intersection plot of the natural gamma curve value-pore structure index curve value.

As a specific embodiment of the above-described method of the present invention, wherein in the process of establishing a quantitative identification mode in conventional logging for sedimentary high permeability streak, the logging curves comprise: a natural gamma curve (GR), a porosity curve (RHOB), a resistivity curve (Rt), and a pore structure index curve (Am). Accordingly, the curve values of logging curves comprise a natural gamma curve value, a porosity curve value, a resistivity curve value and a pore structure index curve value.

In a specific embodiment of the present invention, establishing a quantitative identification mode in conventional logging for sedimentary high permeability streak specifically comprises the following steps:

in the production logging test section, according to the principle of superior fluid flow channel, subtracting obvious non-permeable baffles and barrires and low-permeability reservoir stratums, obtaining curve values of a natural gamma curve (GR), a porosity curve (RHOB), a resistivity curve (Rt) and a pore structure index curve (Am) according to conventional logging curve sampling interval in sections; producing a scatter point intersection plot of double logging curve classification according to the dynamic permeability distribution interval; and analyzing the distribution pattern of the logging curve values and identification limits of the high permeability streaks in conjunction with the geological regularities, thereby establishing a quantitative identification mode in conventional logging for sedimentary high permeability streak;
wherein the curve values comprise a natural gamma curve value, a porosity curve value, a resistivity curve value and a pore structure index curve value;
the scatter plots of double logging curve classification include a scatter point intersection plot of porosity curve value-resistivity curve value and a scatter point intersection plot of natural gamma curve value-pore structure index curve value.

Since the dynamic permeability represents the test results, which would not completely reflect the fluid flow characteristics of the formation due to the influence of interlayer interference, etc., in the present invention, the dynamic permeability distribution interval is determined according to the following specific principles:

0 mD represents no liquid is produced during the test period; other dynamic permeability distribution intervals are determined based on the maximum value and normal-type distribution intervals according to the logarithmic partitioning principle, taking into account the possible lower limit value of the high permeability streak. As in a specific embodiment of the present invention, a permeability greater than 100 mD may refer to a high permeability streak, and a permeability greater than 500 mD may be associated with a Super-K or Thief zone. Therefore, in a specific embodiment of the present invention, the dynamic permeability distribution intervals determined are: 0 mD, 0-1 mD, 1-10 mD, 10-50 mD, 50-100 mD, 100-200 mD, 200-500 mD, 500-1000, and >1000 mD.

As a specific embodiment of the above-described method of the present invention, wherein when the logging curve includes a pore structure index curve, a curve value of the pore structure index curve reflecting storage and permeability characteristics of the reservoir stratum is calculated in accordance with the following Equation (7):

$$Am = \frac{\log(Rw) - \log(Rt) - n \times \log(Sw)}{\log(POR)} \qquad \text{Equation (7)};$$

in Equation (7), $R_w$ is the formation water resistivity in ohm·m; $R_t$ is the undisturbed formation resistivity which is corresponding to the deep probe resistivity curve on the logging curve, in ohm·m; $POR$ is the reservoir stratum porosity in unfactored decimal degrees; $Sw$ is the formation water saturation in unfactored decimal degrees; and n is the saturation index in unfactored decimal degrees.

In a specific embodiment of the above-described method of the present invention, wherein establishing a high permeability streak logging identification mode, identifying high permeability streak on an oil reservoir-wide basis well by well according to the high permeability streak logging identification mode, and realizing oil reservoir-wide logging interpretation, comprises: carrying out quantitative logging identification of high-energy sedimentary high permeability streak according to the quantitative identification mode in conventional logging for sedimentary high permeability streak; and carrying out logging facies qualitative identification as well as constraints and mutual validation of geological regularities according to the qualitative identification mode in logging facies for high permeability streak;

wherein carrying out quantitative logging identification of high-energy sedimentary high permeability streak according to the quantitative identification mode in conventional logging for sedimentary high permeability streak comprises: among the four curves, i.e., the natural gamma curve, the porosity curve, the resistivity curve and the pore structure index curve, GR stands for the lithology and depositional environment, and its low value represents pure lithology, coarse grains and relative high energy deposition; RHOB stands for the total porosity of the rock, and its low value represents high porosity and good physical properties; Rt represents the oil stain and permeability, and its high value in the pure oil layer represents good oil stain, which indicates that the degree of oil and gas filling is high during the formation of reservoirs and thus the permeability of the reservoirs is relatively good; Am represents the pore structure, and its high value represents the complexity of the conductive paths, which is typical of the large pore-small throat type of coarse-grained sedimentary reservoir stratum. Therefore, as a high permeability streak that can form a superior fluid flow channel, all the above conditions must be satisfied, and a point-by-point screening of high-energy sedimentary high permeability streak is done with logging curves simultaneously meeting the criteria for high permeability streaks;

wherein carrying out logging facies qualitative identification according to the qualitative identification mode in logging facies for high permeability streak comprises further identifying and determining the high-energy sedimentary high permeability streak according to the display characteristics of "T2 spectrum showing double peak or multi-peak characteristics and T2 time and energy spectrum peaks showing high values" in the nuclear magnetic logging and "dissolved pores with larger scale and stronger degree" in the image logging;

karst reservoir stratums mostly have the characteristic of "Thief zone", which is subjected to the qualitative identification based on the "development of sinusoidal over-well fractures or irregular micro-fractures, black patchy cavities or large dissolved pores" on the FMI image and the "double-peak or multi-peak characteristics" on the nuclear magnetic logging T2 spectrum;

constraints and mutual validation of geological regularities comprises: the sedimentary high permeability streaks are controlled by sedimentary facies and developed at relatively fixed sedimentary sites, and karst high permeability streaks are constrained by stratigraphic sequences and paleotectonic and developed in the area near the stratigraphic interface; during the above identification process, according to the geological regularities that "tidal channel-type high permeability streaks are mostly developed in the lower part of the tidal channel, bioclastic shoal-type high permeability streaks are mostly developed in the upper part of the shoal, shoal flank type high permeability streaks are mostly developed close to the shoal, and karst high permeability streaks are mostly developed in the vicinity of the stratigraphic interface", high permeability streaks have been validated or picked up again.

As a specific embodiment of the above-described method of the present invention, wherein the method further comprises: utilizing the results of core experiments of the cored wells, the production logging information (such as the PLT test information) and the dynamic permeability data, as well as the water breakthrough layer of the water breakthrough well in the injection-production well group and the development of high permeability streaks in the water breakthrough layer, to validate the identification results of high permeability streaks in a marine carbonate rock bioclastic limestone oil reservoir.

As a specific embodiment of the above-described method of the present invention, wherein utilizing the results of core experiments to validate the identification results of high permeability streaks in a marine carbonate rock bioclastic limestone oil reservoir comprises: among the identified high permeability streaks, analyzing whether the high-energy sedimentary high permeability streak (sedimentary high permeability streak) have a good correspondence with the high permeability portion in the core permeability; in general, the correlation of a karst high permeability streak and the core permeability is unstable, while the correlation of a sedimentary high permeability streak and the core permeability is relatively stable.

As a specific embodiment of the above-described method of the present invention, wherein utilizing the production logging information (such as the PLT test information) and the dynamic permeability data to validate the identification results of high permeability streaks in a marine carbonate rock bioclastic limestone oil reservoir comprises: checking whether the $K\_PBU$ of the identified high permeability streaks is higher than the lower limit value (i.e., the single-layer dynamic permeability corresponding to the dynamic standard of high permeability streaks), checking whether there is a high yield in the PLT test information, and whether there is a statistical relationship between high permeability streaks and high $K\_PBU$ and high PLT yield, to verify the reliability of the method.

As a specific embodiment of the above-described method of the present invention, wherein utilizing the water breakthrough layer of the water breakthrough well in the injection-production well group and the development of high permeability streaks in the water breakthrough layer to validate the identification results of high permeability streaks in a marine carbonate rock bioclastic limestone oil reservoir comprises: in the established injection-production well group, analyzing the correspondence and statistical relationship between the identified high permeability streak and the wells which already had water breakthrough (early water breakthrough wells), to verify the reliability of the method.

In another aspect, the present invention further provides an apparatus for identifying high permeability streaks in a marine carbonate rock bioclastic limestone oil reservoir, wherein the apparatus comprises:

a reservoir stratum dynamic parameter determination module for determining a single-layer dynamic permeability and a single-layer specific liquid productivity index of a single-well flow unit based on well test information and production logging information;

a high permeability streak picking module for analyzing the interlayer interference in the multi-layer commingled production based on the production logging information, establishing a high permeability streak dynamic standard by integrating the single-layer yield in the production logging information and the single-layer dynamic permeability and the single-layer specific liquid productivity index of the single-well flow unit, and picking the high permeability streaks in a single well;

a high permeability streak genetic type classification module for classifying the genetic types of the high permeability reservoir stratum in the cored wells based on the results obtained from the study of stratigraphic sequences, lithofacies, sedimentary facies and petrophysical facies, and determining the distribution pattern of the high permeability streaks in the lithofacies, the sedimentary facies and the stratigraphic interface;

a high permeability streak logging identification module for establishing a high permeability streak logging identification mode, identifying high permeability streak on an oil reservoir-wide basis well by well according to the high permeability streak logging identification mode, and realizing oil reservoir-wide logging interpretation.

The present invention further provides an apparatus for identifying high permeability streaks in a marine carbonate rock bioclastic limestone oil reservoir, wherein the apparatus comprises: a processor, wherein the processor is used for executing the following program module stored in a memory:

a reservoir stratum dynamic parameter determination module for determining a single-layer dynamic permeability and a single-layer specific liquid productivity index of a single-well flow unit based on well test information and production logging information;

a high permeability streak picking module for analyzing the interlayer interference in the multi-layer commingled production based on the production logging information, establishing a high permeability streak dynamic standard by integrating the single-layer yield in the production logging information and the single-layer dynamic permeability and the single-layer specific liquid productivity index of the single-well flow unit, and picking the high permeability streaks in a single well;

a high permeability streak genetic type classification module for classifying the genetic types of the high permeability reservoir stratum in the cored wells based on the results obtained from the study of stratigraphic sequences, lithofacies, sedimentary facies and petrophysical facies, and determining the distribution pattern of the high permeability streaks in the lithofacies, the sedimentary facies and the stratigraphic interface;

a high permeability streak logging identification module for establishing a high permeability streak logging identification mode, identifying high permeability streak on an oil reservoir-wide basis well by well according to the high permeability streak logging identification mode, and realizing oil reservoir-wide logging interpretation.

As a specific embodiment of the above-described apparatus of the present invention, wherein the well test information is PBU information, and the production logging information is PLT test information.

As a specific embodiment of the above-described apparatus of the present invention, wherein the reservoir stratum dynamic parameter determination module comprises a single-layer specific liquid productivity index determination unit for determining a single-layer specific liquid productivity index (SPI) based on well test information and production logging information according to the following Equation (1):

$$\mathrm{SPI} = \frac{q_o}{\Delta P \times h} \qquad \text{Equation (1);}$$

in Equation (1), SPI is the specific liquid productivity index in bbl/(d.psi.m); $q_o$ is the daily liquid productivity in bbl/d; $\Delta P$ is the bottom hole pressure difference in psi; and h is the thickness of the liquid-producing layer in m.

As a specific embodiment of the above-described apparatus of the present invention, wherein the reservoir stratum dynamic parameter determination module further comprises a single-layer dynamic permeability determination unit; for the case of a single-layer well test, when the well test information is PBU information, the single-layer dynamic permeability determination unit is used for determining the single-layer dynamic permeability of the single-well flow unit based on the PBU information, comprising:

1) determining the formation coefficient of this single well based on the interpretation of the PBU information in accordance with equation (2) below;

$$kh = \frac{q\mu}{4\pi m} \qquad \text{Equation (2);}$$

in Equation (2): $kh$ is the formation coefficient of the single well interpreted by the PBU data in mD·m; $q$ is the PBU test yield in m³/ks; $\mu$ is the liquid viscosity in mPa·s; $m$ is the slope of the Horner curve used in the interpretation of the PBU information, with no factor; $h$ is the thickness of the flow unit in m; and $k$ is the single-layer dynamic permeability of the single-well flow unit in mD;

2) determining the thickness of the flow unit on the logging curve, and then dividing the formation coefficient of the single well by the thickness of the flow unit to obtain the single-layer dynamic permeability of the single-well flow unit;

for the case of a commingled-production well test, when the well test information is PBU information and the production logging information is PLT test information, single-layer dynamic permeability determination unit is used for determining the single-layer dynamic permeability of the single-well flow unit based on the PBU information and the PLT test information, comprising:

1) determining the integrated formation coefficient of the single well based on the interpretation of the PBU data in accordance with Equation (2) above;

2) dividing the integrated formation coefficient of the single well into each flow unit using the stratified liquid productivity from the PLT test information in accordance with the following Equation (3)-Equation (5), to obtain the single-layer formation coefficient of each flow unit;

$$q_t = q_1 + q_2 + q_3 + \cdots + q_l \qquad \text{Equation (3);}$$

$$ratio_l = \frac{q_l}{q_t} \qquad\qquad \text{Equation (4);}$$

$$(kh)_l = (kh) \times ration_l \qquad\qquad \text{Equation (5);}$$

in Equation (3)-Equation (5), $q_t$ is the cumulative liquid production in PLT test information in bbl/d; $q_1$, $q_2$, $q_3$, ......$q_l$ are the actual liquid production of different liquid-producing sections in PLT test information in bbl/d; $ration_l$ is the ratio of the actual liquid production in different liquid-producing sections in PLT test information to the cumulative liquid production in PLT test information, in units of no factor; $kh$ is the formation coefficient interpreted by PBU data, i.e., the integrated formation coefficient of this single well in mD·m; and $(kh)_l$ is the single-layer formation coefficient of each flow unit in mD·m;

3) then determining the single-layer dynamic permeability of each flow unit of the single wall based on the single-layer formation coefficient of each flow unit and the thickness of each flow unit in accordance with Equation (6) below;

$$k_l = \frac{(kh)_l}{h_l} \qquad\qquad \text{Equation (6);}$$

in Equation (6), $k_l$ is the single-layer dynamic permeability of the flow unit in mD; $(kh)_l$ is the single-layer formation coefficient of each flow unit in mD·m; $h_l$ is the actual thickness of the liquid-producing section of the flow unit in the PLT test information in m; and $l$ is the number of sections in the actual liquid-producing section in the PLT test information as a positive integer.

As a specific embodiment of the above-described apparatus of the present invention, wherein the reservoir stratum dynamic parameter determination module further comprises a thickness determination unit of the flow unit for determining the thickness of the flow unit, comprising:
deducting the internal baffles and barrires of the unit using the logging curve inside the flow unit shown in the PLT test information; and then correcting the thickness of the flow unit to the plumb depth by well trajectory calculation, to obtain the thickness of the flow unit.

As a specific embodiment of the above-described apparatus of the present invention, wherein the high permeability streak picking module is specifically used for:
establishing a scatter point intersection plot of the single-layer dynamic permeability and the single-layer specific liquid productivity index of the single-well flow unit, analyzing the productivity of the flow unit, i.e., the trend of the specific liquid productivity index as a function of the dynamic permeability and determining an inflection point, and determining the dynamic permeability and the liquid productivity index corresponding to the inflection point as a dynamic identification criteria for the high permeability streaks in a marine carbonate rock bioclastic limestone oil reservoir.

As a specific embodiment of the above-described apparatus of the present invention, wherein the high permeability streak picking module further comprises a single-well high permeability streak picking unit for picking the high permeability streaks in the single well in a stratified manner according to the dynamic identification criteria, which is specifically used for:
drawing rectangular curves of the dynamic permeability and the specific liquid productivity index respectively using the data of the single-layer dynamic permeability and the single-layer specific liquid productivity index of the single-well flow unit determined by sections based on deducting the internal baffles and barrires of the flow unit, and setting the single-layer dynamic permeability and the single-layer specific liquid productivity index in the dynamic standard of the high permeability streak as the baseline of the rectangular curves and filling them with the right side of the rectangular curves; and when both the dynamic permeability and the specific liquid productivity index of a single layer are greater than the dynamic permeability and the specific liquid productivity index corresponding to the baseline of the rectangular curve, the single layer is determined to be a high permeability streak.

As a specific embodiment of the above-described apparatus of the present invention, wherein the high permeability streak genetic type classification module is specifically used for:
utilizing the petrophysical facies classification of the high permeability reservoir stratum or the single well high permeability streak data from the cored wells, analyzing the types of lithofacies and sedimentary facies in which the high permeability reservoir stratum or high permeability streak is developed by means of a scatter point intersection plot or a frequency histogram; and at the same time, in conjunction with the results of the classification of the sedimentary microfacies and stratigraphic sequences, analyzing the location of the high permeability streaks in the sedimentary facies and stratigraphic sequences.

As a specific embodiment of the above-described apparatus of the present invention, wherein the high permeability streak logging identification module is specifically used for:

taking a single well production logging test section as a sample and taking the single-layer dynamic permeability and the single-layer specific liquid productivity index corresponding to the dynamic standard of the high permeability streak as boundaries, analyzing the logging responsecharacteristics of the high permeability streak and non-high permeability streak, and establishing a qualitative identification mode in logging facies for high permeability streak and a quantitative identification mode in conventional logging for sedimentary high permeability streak;

As a specific embodiment of the above-described apparatus of the present invention, wherein high permeability streak logging identification module comprises an establishing unit of the qualitative identification mode in logging facies for high permeability streak, which is used for:

analyzing the difference between the high permeability streak and the non-high permeability streak on the conventional logging curve, the FMI image logging, and the nuclear magnetic logging T2 spectrum, and establishing the qualitative identification mode in logging facies for high permeability streaks in the sedimentary reservoir stratum and the karst reservoir stratum, respectively, based on the results obtained from the analysis.

As a specific embodiment of the above-described apparatus of the present invention, wherein high permeability streak logging identification module comprises an establishing unit of quantitative identification mode in conventional logging for sedimentary high permeability streak, which is used for:

in the production logging test section, according to the principle of superior fluid flow channel, subtracting obvious non-permeable baffles and barrires and low-permeability reservoir stratums, obtaining logging curve values according to conventional logging curve sampling interval in sections; producing a scatter point intersection plot of double logging curve classification according to the dynamic permeability distribution interval; and analyzing the distribution pattern of the logging curve values and identification limits of the high permeability streaks in conjunction with the geological regularities, thereby establishing a quantitative identification mode in conventional logging for sedimentary high permeability streak.

As a specific embodiment of the above-described apparatus of the present invention, wherein the high permeability streak logging identification module further comprises a curve value calculation unit of the pore structure index curve, which is used for:

when the logging curve includes a pore structure index curve, a curve value of the pore structure index curve is calculated in accordance with the following Equation (7):

$$Am = \frac{\log(Rw) - \log(Rt) - n \times \log(Sw)}{\log(POR)} \qquad \text{Equation (7)};$$

in Equation (7), $R_w$ is the formation water resistivity in ohm·m; $R_t$ is the undisturbed formation resistivitywhich is corresponding to the deep probe resistivity curve on the logging curve, in ohm·m; $POR$ is the reservoir stratum porosity in unfactored decimal degrees; Sw is the formation water saturation in unfactored decimal degrees; and n is the saturation index in unfactored decimal degrees.

As a specific embodiment of the above-described apparatus of the present invention, wherein the apparatus further comprises an identification result checking module for utilizing the results of core experiments of the cored wells, the production logging information and the dynamic permeability data, as well as the water breakthrough layer of the water breakthrough well in the injection-production well group and the development of high permeability streaks in the water breakthrough layer, to validate the identification results of high permeability streaks in a marine carbonate rock bioclastic limestone oil reservoir.

In another aspect, the present invention further provides a computer apparatus comprising a memory, a processor and a computer program stored on the memory and runnable on the processor, wherein the processor when executing the computer program realizes the steps of the above-described method for identifying high permeability streaks in a marine carbonate rock bioclastic limestone oil reservoir.

In yet another aspect, the present invention further provides a computer readable storage medium having a computer program stored thereon, wherein the computer program when being executed by the processor realizes the steps of the above-described method for identifying high permeability streaks in a marine carbonate rock bioclastic limestone oil reservoir.

The present invention takes the dynamic production as the key and provides a static-dynamic integrated method and apparatus for identifying the high permeability streaks in a marine carbonate rock bioclastic limestone oil reservoir under the constraints of geologic regularities. The theoretical basis and technical logic of the method and apparatus provided by the present invention are solid and reliable, and the method is simple and easy to operate. The objects of the method and apparatus provided by the present invention include but are not limited to thief zones, and the method and apparatus can effectively solve the problem of identifying high-energy sedimentary high permeability streaks in a marine carbonate rock bioclastic limestone oil reservoir, which has the greatest influence on the development of water injection. The method and apparatus provided by the present invention can provide a set of reliable high permeability streaks information covering the whole oil reservoir after being popularized and applied in the oilfields, and it has been verified that all the early water breakthrough wells in the current water injection well group have been related to the high permeability streak identified by the method and apparatus of the present invention, which provide technical support for the optimization design of new injection-production well group.

Description of the accompanying drawings

In order to more clearly illustrate the technical solutions in the embodiments or prior art of the present invention, the accompanying drawings to be used in the description of the embodiments will be briefly described below. Obviously, the accompanying drawings in the following description are some embodiments of the present invention, and other accompanying drawings can be obtained based on these drawings without creative labor for a person of ordinary skill in the art.

Figure 1 is a flowchart of a method for identifying high permeability streaks in a marine carbonate rock bioclastic limestone oil reservoir provided by an embodiment of the present invention.

Figure 2 is a schematic diagram of the PBU test results of Well X in an oilfield in a specific embodiment of the present invention.

Figure 3 is a schematic diagram of the results of dynamic testing and picking of high permeability streak of data Well Y in an oil field in a specific embodiment of the present invention.

Figure 4 is a schematic diagram of the Horner curve of the PBU test of Well X in a specific embodiment of the present invention.

Figure 5 is a schematic diagram of interlayer interference identification of well Z in a specific embodiment of the present invention.

Figure 6 is a schematic diagram of the determination of the dynamic identification criteria of high permeability streaks in a specific embodiment of the present invention.

Figure 7 is a schematic diagram of the research results of stratigraphic sequences, lithofacies, sedimentary facies of a single well in a specific embodiment of the present invention.

Figure 8 is a schematic diagram of petrophysical classification of effective reservoir stratum in a specific embodiment of the present invention.

Figure 9 is a schematic diagram of the lithofacies analysis developed in a highly permeable reservoir stratum in a specific embodiment of the present invention.

Figure 10a is a statistical histogram of lithofacies developed in a high permeability reservoir stratum in a specific embodiment of the present invention.

Figure 10b is a statistical histogram of sedimentary facies developed in a high permeability reservoir stratum in a specific embodiment of the present invention.

Figure 11a is a schematic diagram of the electrical characteristics and longitudinal distribution of tidal channel-type sedimentary high permeability streaks in a specific embodiment of the present invention.

Figure 11b is a schematic diagram of the electrical characteristics and longitudinal distribution of bioclastic shoal-type sedimentary high permeability streaks in a specific embodiment of the present invention.

Figure 11c is a schematic diagram of the electrical characteristics and longitudinal distribution of shoal flank-type sedimentary high permeability streaks in a specific embodiment of the present invention.

Figure 12a is a schematic diagram of the electrical characteristics and longitudinal distribution of karst high permeability streaks in Well D in a specific embodiment of the present invention.

Figure 12b is a schematic diagram of the electrical characteristics and longitudinal distribution of karst high permeability streaks in Well E in a specific embodiment of the present invention.

Figure 13a is a schematic diagram of the FMI and CMR logging characteristics of sedimentary high permeability streaks in a specific embodiment of the present invention.

Figure 13b is a schematic diagram of the FMI and CMR logging characteristics of karst high permeability streaks in a specific embodiment of the present invention.

Figure 14 is a schematic diagram of sample picking for establishing a logging interpretation model for high permeability streaks in a specific embodiment of the present invention.

Figure 15a is a RHOB-Rt scatter point intersection plot of the dual logging curve based on K_PBU classification in a specific embodiment of the present invention.

Figure 15b is a GR-Am scatter point intersection plot of the dual logging curve based on K_PBU classification in a specific embodiment of the present invention.

Figure 16a is a schematic diagram of single well identification results of high permeability streaks in a specific embodiment of the present invention.

Figure 16b is a FMI image and a CMR logging $T_2$ spectrum of the karst high permeability streaks corresponding to 76 in Figure 16a.

Figure 16c is a FMI image and a CMR logging $T_2$ spectrum of the karst high permeability streaks corresponding to 77 in Figure 16a.

Figure 17a, wherein the mark 79 is a well location map of the injection-production well group.

Figure 17b is the comparison of two injection wells (INJ1, INJ2) and one production well (PROD 1).

Figure 17c is a lagend of the sedimentary microfacies corresponding to 84 in Figure 17b.

Figure 18 is a schematic diagram of an apparatus for identifying high permeability streaks in a marine carbonate rock bioclastic limestone oil reservoir provided in an embodiment of the present invention.

Figure 19 is a schematic diagram of an apparatus for identifying high permeability streaks in a marine carbonate rock bioclastic limestone oil reservoir provided in another embodiment of the present invention.

Detailed Description of Preferred Embodiments

In order to have a clearer understanding of the technical features, objectives and beneficial effects of the present invention, the following detailed description of the technical solutions of the present invention is given with reference to the following specific embodiments, but it is not to be understood as the limitation of the practicable scope of the present invention.

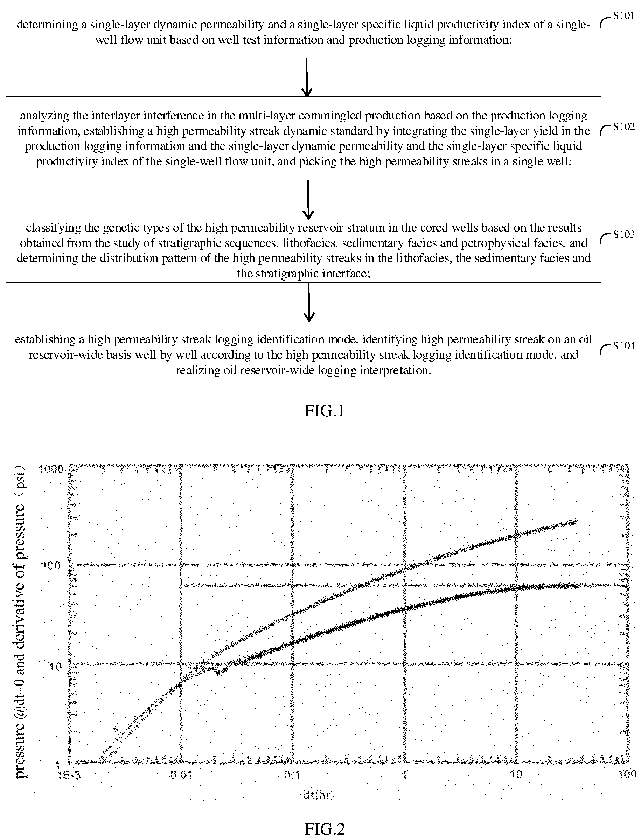

Figure 1 is a flowchart of a method for identifying high permeability streaks in a marine carbonate rock bioclastic limestone oil reservoir provided by an embodiment of the present invention. In Figure 1, it can be seen that the method for identifying high permeability streaks in a marine carbonate rock bioclastic limestone oil reservoir comprises the following steps:

S101: determining a single-layer dynamic permeability and a single-layer specific liquid productivity index of a single-well flow unit based on well test information and production logging information;

S102: analyzing the interlayer interference in the multi-layer commingled production based on the production logging information, establishing a high permeability streak dynamic standard by integrating the single-layer yield in the production logging information and the single-layer dynamic permeability and the single-layer specific liquid productivity index of the single-well flow unit, and picking the high permeability streaks in a single well;

S103: classifying the genetic types of the high permeability reservoir stratum in the cored wells based on the results obtained from the study of stratigraphic sequences, lithofacies, sedimentary facies and petrophysical facies, and determining the distribution pattern of the high permeability streaks in the lithofacies, the sedimentary facies and the stratigraphic interface;

S104: establishing a high permeability streak logging identification mode, identifying high permeability streak on an oil reservoir-wide basis well by well according to the high permeability streak logging identification mode, and realizing oil reservoir-wide logging interpretation.

In an embodiment, the well test information is PBU information, and the production logging information is PLT test information.

In an embodiment, a single-layer specific liquid productivity index (SPI) is determined based on well test information and production logging information according to the following Equation (1):

$$ \text{SPI} = \frac{q_o}{\Delta P \times h} \qquad \text{Equation (1);} $$

in Equation (1), SPI is the specific liquid productivity index in bbl/(d.psi.m); $q_o$ is the daily liquid productivity in bbl/d; $\Delta P$ is the bottom hole pressure difference (production differential pressure) in psi; and h is the thickness of the liquid-producing layer in m.

In an embodiment, for the case of a single-layer well test, when the well test information is PBU information, the single-layer dynamic permeability of the single-well flow unit is determined based on the PBU information, comprising:

1) determining the formation coefficient of this single well based on the interpretation of the PBU information in accordance with equation (2) below;

$$kh = \frac{q\mu}{4\pi m} \qquad \text{Equation (2);}$$

in Equation (2): $kh$ is the formation coefficient of the single well interpreted by the PBU data in mD·m; $q$ is the PBU test yield in m$^3$/ks; $\mu$ is the liquid viscosity in mPa·s; $m$ is the slope of the Horner curve used in the interpretation of the PBU information, with no factor; $h$ is the thickness of the flow unit in m; and $k$ is the single-layer dynamic permeability of the single-well flow unit in mD;

2) determining the thickness of the flow unit on the logging curve, and then dividing the formation coefficient of the single well by the thickness of the flow unit to obtain the single-layer dynamic permeability of the single-well flow unit;

for the case of a commingled-production well test, when the well test information is PBU information and the production logging information is PLT test information, determining the single-layer dynamic permeability of the single-well flow unit based on the PBU information and the PLT test information, comprising:

1) determining the integrated formation coefficient of the single well based on the interpretation of the PBU data in accordance with Equation (2) above;

2) dividing the integrated formation coefficient of the single well into each flow unit using the stratified liquid productivity from the PLT test information in accordance with the following Equation (3)-Equation (5), to obtain the single-layer formation coefficient of each flow unit;

$$q_t = q_1 + q_2 + q_3 + \cdots + q_l \qquad \text{Equation (3);}$$

$$ratio_l = \frac{q_l}{q_t} \qquad \text{Equation (4);}$$

$$(kh)_l = (kh) \times ration_l \qquad \text{Equation (5);}$$

in Equation (3)-Equation (5), $q_t$ is the cumulative liquid production in PLT test information in bbl/d; $q_1$, $q_2$, $q_3$, ......$q_l$ are the actual liquid production of different liquid-producing sections in PLT test information in bbl/d; $ration_l$ is the ratio of the actual liquid production in different liquid-producing sections in PLT test information to the cumulative liquid production in PLT test information, in units of no factor; $kh$ is the formation coefficient interpreted by PBU data, i.e., the integrated formation coefficient of this single well in mD·m; and $(kh)_l$ is the single-layer formation coefficient of each flow unit in mD·m;

3) then determining the single-layer dynamic permeability of each flow unit of the single wall based on the single-layer formation coefficient of each flow unit and the thickness of each flow unit in accordance with Equation (6) below;

$$k_l = \frac{(kh)_l}{h_l} \qquad \text{Equation (6);}$$

in Equation (6), $k_l$ is the single-layer dynamic permeability of the flow unit in mD; $(kh)_l$ is the single-layer formation coefficient of each flow unit in mD·m; $h_l$ is the actual thickness of the liquid-producing section of the flow unit in the PLT test information in m; and $l$ is the number of sections in the actual liquid-producing section in the PLT test information as a positive integer.

In an embodiment, determining the thickness of the flow unit comprises:
deducting the internal baffles and barrires of the unit using the logging curve inside the flow unit shown in the PLT test information; and then correcting the thickness of the flow unit to the plumb depth by well trajectory calculation, to obtain the thickness of the flow unit.

In an embodiment, establishing a high permeability streak dynamic standard by integrating the single-layer yield in the production logging information and the single-layer dynamic permeability and the single-layer specific liquid productivity index of the single-well flow unit comprises:
establishing a scatter point intersection plot of the single-layer dynamic permeability and the single-layer specific liquid productivity index of the single-well flow unit, analyzing the productivity of the flow unit, i.e., the trend of the specific liquid productivity index as a function of the dynamic permeability and determining an inflection point, and determining the dynamic permeability and the specific liquid productivity index corresponding to the inflection point as a dynamic identification criteria for the high permeability streaks in a marine carbonate rock bioclastic limestone oil reservoir.

In an embodiment, picking the high permeability streaks in a single well comprises: picking the high permeability streaks in the single well in a stratified manner according to the dynamic identification criteria, specifically comprising: drawing rectangular curves of the dynamic permeability and the specific liquid productivity index respectively using the data of the single-layer dynamic permeability and the single-layer specific liquid productivity index of the single-well flow unit determined by sections based on deducting the internal baffles and barrires of the flow unit, and setting the single-layer dynamic permeability and the single-layer specific liquid productivity index in the dynamic standard of the high permeability streak as the baseline of the rectangular curves and filling them with the right side of the baseline to the rectangular curves; and when both the dynamic permeability and the specific liquid productivity index of a single layer are greater than the dynamic permeability and the specific liquid productivity index corresponding to the baseline of the rectangular curve, the single layer is determined to be a high permeability streak.

In an embodiment, classifying the genetic types of the high permeability reservoir stratum based on the study results of stratigraphic sequences, lithofacies, sedimentary facies and petrophysical facies and determining the distribution pattern of the high permeability streaks in the lithofacies, the sedimentary facies and the stratigraphic interface comprises:

utilizing the petrophysical facies classification of the high permeability reservoir stratum or the single well high permeability streak data from the cored wells, analyzing the types of lithofacies and sedimentary facies in which the high permeability reservoir stratum or high permeability streak is developed by means of a scatter point intersection plot or a frequency histogram; and at the same time, in conjunction with the results of the classification of the sedimentary microfacies and stratigraphic sequences, analyzing the location of the high permeability streaks in the sedimentary facies and stratigraphic sequences.

In an embodiment, establishing a high permeability streak logging identification mode comprises:

taking a single well production logging test section as a sample and taking the single-layer dynamic permeability and the single-layer specific liquid productivity index corresponding to the dynamic standard of the high permeability streak as boundaries, analyzing the logging response characteristics of the high permeability streak and non-high permeability streak, and establishing a qualitative identification mode in logging facies for high permeability streak and a quantitative identification mode in conventional logging for sedimentary high permeability streak.

In an embodiment, establishing a qualitative identification mode in logging facies for high permeability streak comprises:

analyzing the difference between the high permeability streak and the non-high permeability streak on the conventional logging curve, the FMI image logging, and the nuclear magnetic logging T2 spectrum, and establishing the qualitative identification mode in logging facies for high permeability streaks in the sedimentary reservoir stratum and the karst reservoir stratum, respectively, based on the results obtained from the analysis.

In an embodiment, wherein in the sedimentary reservoir stratum, the high permeability streaks are mostly developed in high-energy depositional environments, and most of them belong to the pore-type high permeability streaks with pure lithology, coarse grain size, high porosity and high permeability; the conventional logging curve shows low gamma, high porosity, and high electrical resistivity; the FMI image is light-colored, with a regular or irregular distribution of black patches, showing intergranular pores or development of larger dissolved pores; the nuclear magnetic logging T2 spectrum shows that the T2 values are characterized by double or multiple peaks, and the T2 time and energy spectrum peaks show high values;

in the karst reservoir stratum, the high permeability streaks are thin, with non-obvious conventional logging features but high productivity, and most of them show the characteristics of "thief zone"; FMI image shows the development of sinusoidal over-well fractures or irregular microfractures, and caverns or large dissolved pores in some wells; the nuclear magnetic logging T2 spectrum shows double peaks or multiple peaks, with medium or low T2 time and energy spectrum peaks, and the high permeability streak developing caverns or large dissolved pores shows large T2 values.

In an embodiment, establishing a quantitative identification mode in conventional logging for sedimentary high permeability streak comprises:

in the production logging test section, according to the principle of superior fluid flow channel, subtracting obvious non-permeable baffles and barries and low-permeability reservoir stratums (high gamma, high-density, low-resistivity and low-Am layers in the oil reservoirs), obtaining logging curve values according to conventional logging curve sampling interval in sections; producing a scatter point intersection plot of double logging curve classification according to the dynamic permeability distribution interval; and analyzing the distribution pattern of the logging curve values and identification limits of the high permeability streaks in conjunction with the geological regularities, thereby establishing a quantitative identification mode in conventional logging for sedimentary high permeability streak.

In an embodiment, when the logging curve includes a pore structure index curve, a curve value of the pore structure index curve is calculated in accordance with the following Equation (7):

$$Am = \frac{\log(Rw) - \log(Rt) - n \times \log(Sw)}{\log(POR)} \qquad \text{Equation (7);}$$

in Equation (7), $R_w$ is the formation water resistivity in ohm·m; $R_t$ is the undisturbed formation resistivity which is corresponding to the deep resistivity curve on the logging curve, in ohm·m; POR is the reservoir stratum porosity in unfactored decimal degrees; Sw is the formation water saturation in unfactored decimal degrees; and n is the saturation index in unfactored decimal degrees.

In an embodiment, the method further comprises: utilizing the results of core experiments of the cored wells, the production logging information and the dynamic permeability data, as well as the water breakthrough layer of the water breakthrough well in the injection-production well group and the development of high permeability streaks in the water breakthrough layer, to validate the identification results of high permeability streaks in a marine carbonate rock bioclastic limestone oil reservoir.

The following shows an example of an oil field in a marine carbonate rock bioclastic limestone, to specifically illustrate the method for identifying high permeability streaks in a marine carbonate rock bioclastic limestone reservoir provided by the present invention, which comprises:

determining a single-layer dynamic permeability and a single-layer specific liquid productivity index of a single-well flow unit based on well test information and production logging information: wherein the well test information is PBU information and the production logging information is PLT test information.

in a specific embodiment, Figure 2 is a schematic diagram of the PBU test results of Well X in the oilfield; from Figure 2, it can be seen that the well has reached the stage of pseudo stable flow during the well test, the reservoir stratum parameters explained by the double logarithmic curves of the well test can more realistically reflect the reservoir stratum characteristics of the flow unit drilled through by a single well, and the formation coefficient explained by utilizing it can better reveal the productivity of the flow unit;

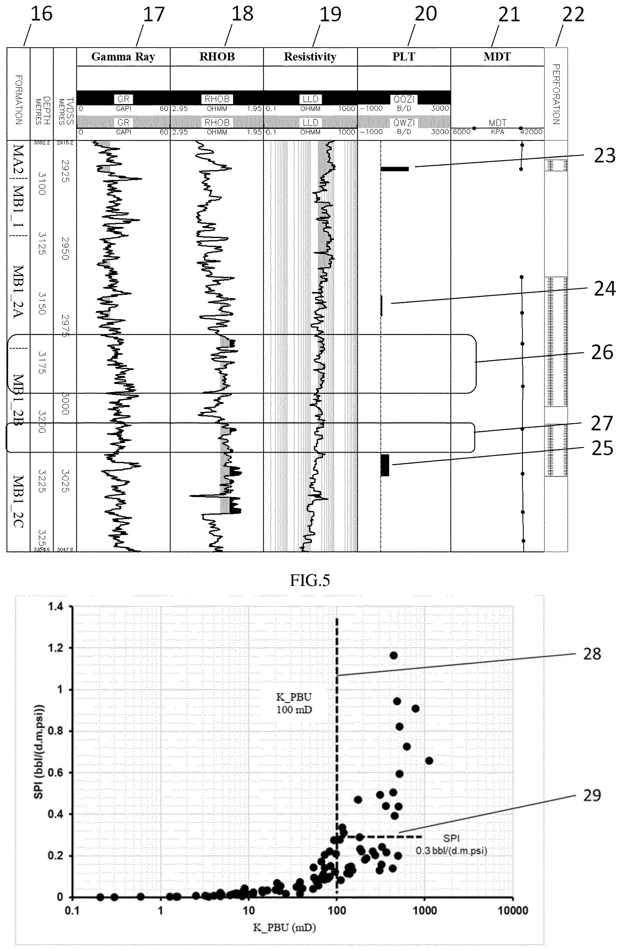

in a specific embodiment, Figure 3 is a schematic diagram of the results of dynamic testing and picking of high permeability streak of Well Y in the oil field; in Figure 3, the label 1 is a measure depth track of logging; 2 is a plumb depth track after kelly bushing correction; 3 is a track of natural gamma (GR) and rock density (RHOB) curves overlapping; 4 is a track of natural gamma (GR) and deep probing resistivity (LLD) curves overlapping; 5 is a PLT test track; 6 is a track of the K_PBU calculation results; 7 is a track of the SPI calculation results; 8 is a track of the perforation section indication; 9 is a K_PBU baseline; 10 is a K_PBU rectangular curve; 11 is a SPI baseline; 12 is a SPI rectangular curve; 13 is the filling from SPI baseline to the right with the SPI rectangular curve (the black area represented by 13 in Figure 3), which can be filled only when the SPI value is larger than the SPI baseline value; and 14-15 are the baffles and barrires of the perforation section; as shown by 5 in Figure 5, the liquid producing sections in PLT test show discontinuously distributed within the perforation section, with the most production at the top of MB1-2C, i.e., the liquid producing sections in PLT test within the perforation section show the flow units through the test wells under current production conditions;

in a specific embodiment, determining the thickness of the flow unit comprises:

deducting the internal baffles and barrires of the unit using the logging curve inside the flow unit shown in the PLT (14 and 15 in Figure 3); and then correcting the thickness of the flow unit to the plumb depth by well trajectory calculation (2 in Figure 3), to obtain the thickness of the flow unit;

in a specific embodiment, the single-layer specific liquid productivity index of Well Y is determined in accordance with Equation (1) above; as shown in 7 in Figure 3 and Table 1, the production differential pressure (bottom hole pressure differential) of the five PLT production sections of the well is 453.7 psi, the daily oil production is 196.93-1015.70 bbl/d, and the flow unit thickness (plumb thickness of the PLT production sections) is 1.30-7.23 m; accordingly, the range of the SPI values calculated in accordance with Equation (1) is 0.064- 0.525 bbl/(d-psi-m);

Table 1. The calculation results of the specific liquid productivity index of Well Y

| Layer No. | Plumb thickness, m | Oil production, bbl/d | Production differential pressure, MPa | SPI, bbl/(d·psi·m) |
|---|---|---|---|---|
| 9 | 1.30 | 309.51 | 453.7 | 0.525 |
| 10 | 6.78 | 196.93 | 453.7 | 0.064 |
| 11 | 7.23 | 406.63 | 453.7 | 0.124 |
| 12 | 5.70 | 1015.70 | 453.7 | 0.393 |
| 13 | 3.00 | 703.81 | 453.7 | 0.517 |

in a specific embodiment, since Well Y is a case of commingled-production test well, the dynamic permeability is calculated according to Equation (4)-Equation (6) as described above, and the intermediate parameters involved in the calculation process as well as the resultant data obtained from the calculations are shown in 6 in Figure 3 and in Table 2; it can be seen that the K_PBU values of different flow units obtained by the comprehesive interpretation of PBU information and PLT test information range from 26.00 to 328.54 mD, with the highest values in the flow units at the top of MB1-2A and the upper part of MB1-2C, and the results of the calculations in the upper part of MB1-2C have a better correlation with the geologic characteristics of the reservoir stratum and the logging response characteristics, while the logging response characteristics of the very thin layer at the top of MB1-2A is not obvious; however, it is difficult to be recognized except for image logging, and it has the typical characteristics of "Thief zone", because it is near the 3rd order of stratigraphic sequence interface and related to the exposure and dissolution.

Table 2. The calculation results of the dynamic permeability of Well Y

| Layer No. | Measure depth of logging, m | Plumb thickness, m | Oil production, bbl/d | Sub-layer formation coefficient, mD.m | K_PBU, mD | K_PBU after deducting baffles , mD |
|---|---|---|---|---|---|---|
| 9 | 2905.00 | 1.30 | 309.51 | 427.11 | 181.37 | 328.54 |
| 10 | 2947.00 | 6.78 | 196.93 | 176.23 | 26.16 | 26.00 |
| 11 | 2964.00 | 7.23 | 406.63 | 561.13 | 69.92 | 77.61 |
| 12 | 2978.10 | 5.70 | 1015.70 | 1401.61 | 309.54 | 245.90 |
| 13 | 2984.00 | 3.00 | 703.81 | 971.22 | 515.14 | 323.74 |

analyzing the interlayer interference in the multi-layer commingled production based on the production logging information, establishing a high permeability streak dynamic standard by integrating the single-layer yield in the production logging information and the single-layer dynamic permeability and the single-layer specific liquid productivity index of the single-well flow unit, and picking the high permeability streaks in a single well:

in a specific embodiment, analyzing the interlayer interference in the multi-layer commingled production based on the production logging information comprises: analyzing the production suppression and interference situation of the possible high-productivity layer on the relatively poor reservoir based on the production logging information (e.g., PLT test information);

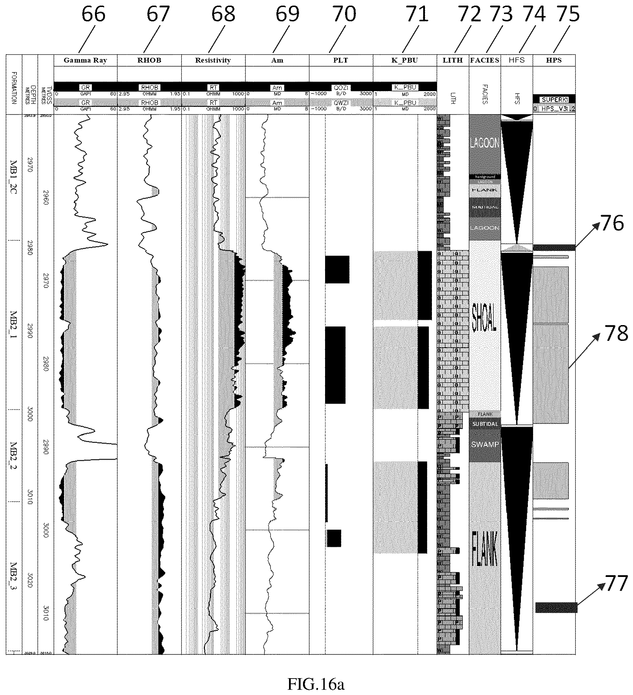

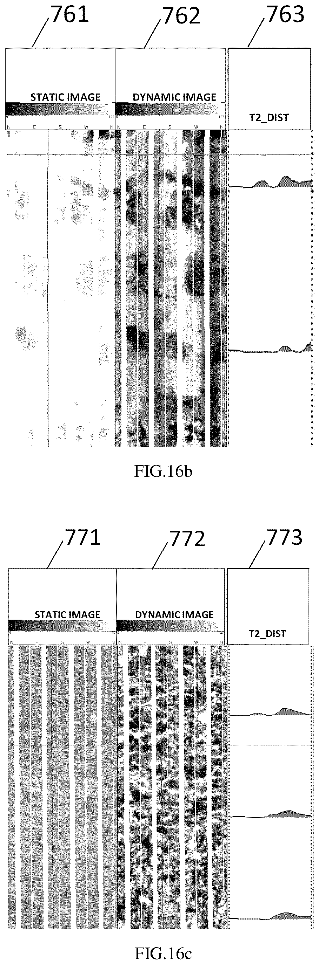

Figure 5 is a schematic diagram of interlayer interference identification of well Z in a specific embodiment of the present invention; in Figure 5, 16 is the single well layer division information; 17-19 are conventional logging natural gamma, rock density, and deep resistivity curves, respectively; 20 is the PLT test curve; 21 is the MDT test information; 22 is the perforation profile; 23-25 are the production data of PLT tests in different layers; and 26-27 are the PLT non-productive layer sections; as can be seen from Figure 5, due to the influence of the MA2 high-production layer (23) and the MB1-2C high-production layer (25), the central MB1-2A and MB1-2B reservoir stratums with similar characteristics to the MB1-2C production layer show low production (24) or even no production (26-27), indicating that there is an obvious effect of production suppression and interlayer interference;

in a specific embodiment, establishing a high permeability streak dynamic standard by integrating the single-layer yield in the production logging information and the single-layer dynamic permeability and the single-layer specific liquid productivity index of the single-well flow unit comprises:

establishing a scatter point intersection plot of the single-layer dynamic permeability and the single-layer specific liquid productivity index of the single-well flow unit, wherein the scatter point intersection plot (i.e., schematic diagram for determining the dynamic identification criteria of high permeability streaks) is shown in Figure 6; from Figure 6, it can be seen that SPI monotonically increases with K_PBU with good correlation, and SPI bifurcates significantly at K_PBU = 100 mD; the inflection point is set to K_PBU = 100 mD (28) and SPI = 0.3 bbl/(d-psi-m) (29); above the inflection point, the productivity of the flow unit rapidly enhances with the increase of permeability, accordingly, K_PBU=100 mD and SPI=0.3 bbl/(d-psi-m) are defined as the dynamic identification criteria of high permeability streaks in the bioclastic limestone oil reservoir in the specific embodiment; subsequently, picking high permeability streaks by layers in the well with both the PBU information and the PLT test information according to the dynamic identification criteria of high permeability streaks in the bioclastic limestone oil reservoir may provide a sample for establishing an identification mode extended to the whole oil reservoir; as shown in Figure 3, drawing rectangular curves of the dynamic permeability using the K_PBU and SPI data determined by sections based on deducting the internal baffles and barrires of the flow unit, and setting dynamic permeability lower-limit of the high permeability streak (K_PBU=100 mD, SPI=0.3 bbl/(d·psi·m)) as the baseline (6, 7, 9 and 11 in Figure 3) of the rectangular curves and filling them from the right side of the baseline to the rectangular curves; when K_PBU and SPI are greater than the dynamic permeability and the specific liquid productivity index corresponding to the baseline, it indicates that the layer is a high permeability streak; a total of 200 flow units from 31 wells are analyzed in this specific embodiment, and 62 high permeability streaks are picked; they effectively cover all the sweet-spot sedimentary facies of the oil reservoir, with a large number of samples and good representativeness, which lays a good foundation for the establishment of geological and logging identification modes.

The genetic types of the high permeability reservoir stratum in the cored wells are classified based on the results obtained from the study of stratigraphic sequences, lithofacies, sedimentary facies and petrophysical facies, and the distribution pattern of the high permeability streaks in the lithofacies, the sedimentary facies and the stratigraphic interface are determined.

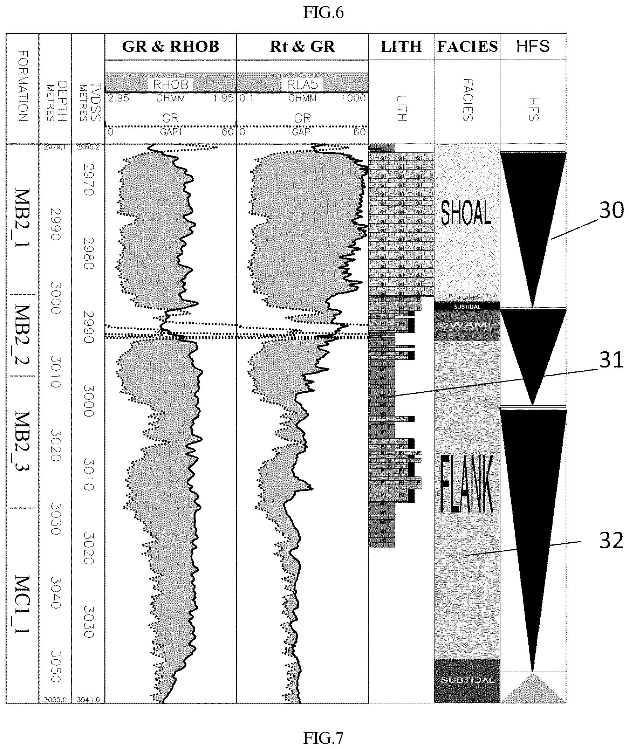

In a specific embodiment, the study of stratigraphic sequences comprises: based on the theory of stratigraphic sequence in which sea level change controls the formation and development of stratigraphic sequences, establishing a hierarchical sub-sea stratigraphic classification scheme based on petrographic cycle and seismic sequence structures, and generalizing it to the whole oil reservoir by means of the well logging curve of the single well and three-dimensional seismic volume. The target oil reservoir in the specific embodiment was divided into three and four orders sequences which are all characterized by rapid transgression, slow regression and the top exposure, which are comparable, and tidal channels and incisions are developed at the top of some sequences (e.g., 30 in Figure 7).

In a specific embodiment, the study of lithofacies comprises: classifying the lithofacies type according to the particle structure of carbonate rock and according to the Dunham scheme; in cored wells, classifying the lithofacies according to core observation and thin-section analysis, calibrating logging, and establishing identification standards; and in non-cored wells, utilizing logging curves to identify the lithofacies, so as to generalize it to the entire oil reservoir. In a specific embodiment, the oil reservoir is developed on a gently sloping platform, and the carbonate particle structure is dominated by bioclastic particles, lime mud matrix and bright crystal cement. Because the effective reservoir stratum is weakly cemented, five lithofacies are delineated: grainstone (>75% particles), grain-dominated packstone (50%-75% particles), mud-dominated packstone (25%-50% particles), wackestone (10%-25% particles), and mudstone(<10% particles). As shown in 31 in Figure 7, the logging curves are characterized by higher gamma (especially de-uraniumized gamma) values and lower resistivity values under the same conditions as the content of particles decreases.

In a specific embodiment, the study of sedimentary facies comprises: determining an oil reservoir depositional environment based on a regional geological background and establishing a depositional model; in cored wells, analyzing depositional features based on the core and thin-section analysis, classifying sedimentary microfacies, calibrating logging, and establishing a logging model for identifying sedimentary microfacies; and, in non-cored wells, utilizing logging curves for identifying sedimentary microfacies by features such as morphology, combination, and longitudinal rhythmic changes, so as to generalize it to the entire oil reservoir. In a specific embodiment, the oil reservoir is a weakly rimmed gently sloping carbonate platform environment, and a total of eight sedimentary microfacies are delineated, including tidal channel, incision, platform inner bioclastic shoal, platform edge bioclastic shoal, shoal flank, lagoon, swamp and subtidal. From 32 in Figure 7, it can be seen that the sedimentary microfacies in high-energy environments, such as tidal channel and bioclastic shoal, mostly develop grainstone and grain-dominated packstone, while the sedimentary microfacies in low-energy environments, such as subtidal and lagoon, mostly develop mudstone, wackestone and mud-dominated packstone.

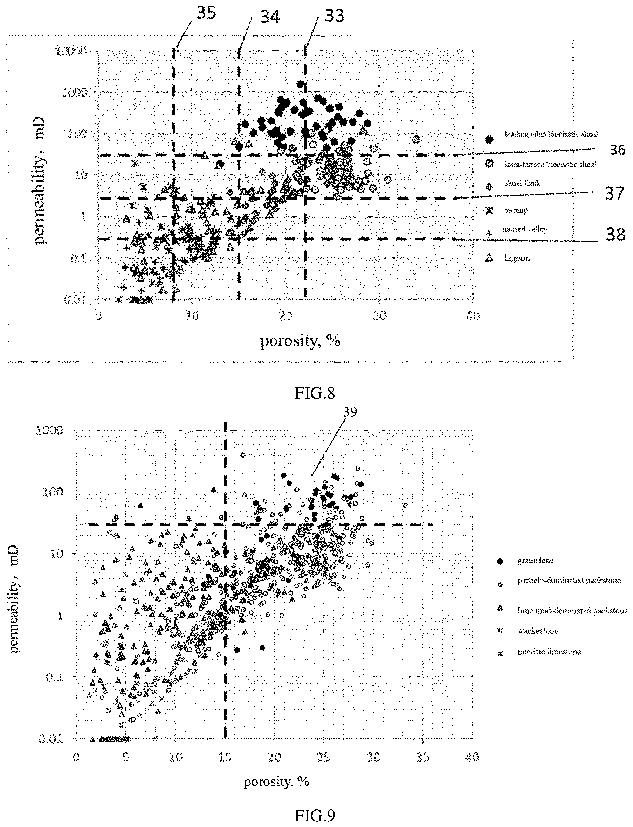

In a specific embodiment, the study of petrophysical facies comprises: classifying the carbonate reservoir stratums into four levels of high porosity (≥20%), medium porosity (12%-20%), low porosity (4%-12%), and very low porosity (<4%) according to the core porosity, and four levels of high permeability (≥100 mD), medium permeability (10-100 mD), low permeability (1-10 mD), and very low permeability (<1 mD) according to the China's petroleum and natural gas industry standard "Oil and gas reservoir evaluation method" (SY/T 6285-1997). In a specific embodiment, considering that the porosity and permeability grading standards of different oilfields may not be completely consistent with the national standards due to differences in oil reservoir and reservoir stratum genesis, in the present invention, the porosity and permeability grading standards can be determined by using the scatter point intersection plot of porosity and permeability constrained by the main controlling factors of the reservoir (e.g., sedimentary microfacies) based on the physical property experiments of standard cores from cored wells. As shown in Figure 8, in consideration of the effective reservoir stratum genesis and the pore and permeability scatter point clustering characteristics, the standard boundaries of porosity grading are adjusted to be 22% (33 in Figure 8), 15% (34 in Figure 8) and 8% (35 in Figure 8), and the standard boundaries of permeability grading were adjusted to be 30 mD (36 in Figure 8), 3 mD (37 in Figure 8) and 0.3 mD (38 in Figure 8), which are slightly different from the industry standards.

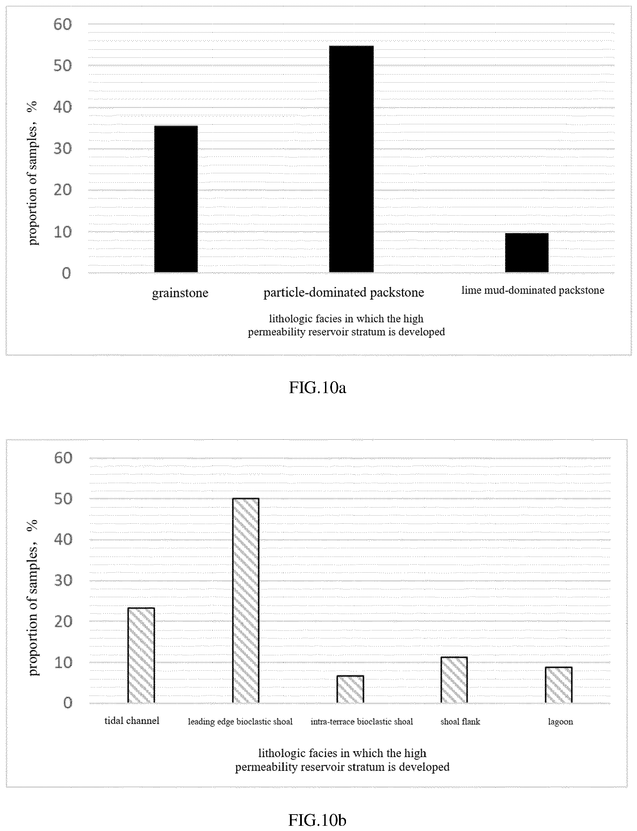

In a specific embodiment, by utilizing the petrophysical facies classification of the high permeability reservoir stratum or the single well high permeability streak data from the cored wells, the types of lithofacies and sedimentary facies in which the high permeability reservoir stratum or high permeability streak is developed are analyzed by means of a scatter point intersection plot or a frequency histogram. As indicated by 39 in Figure 9, the high permeability reservoirs in the petrophysical facies (core permeability >30 mD, porosity >0.15) are mainly developed in grainstone and grain-dominated packstone. At the same time, in conjunction with the results of the classification of the sedimentary microfacies and stratigraphic sequences, the location of the high permeability streaks in the sedimentary facies and stratigraphic sequences are analyzed to provide constraints of regularities for the identification of the high permeability streak using the logging information. Figure 10a is a statistical histogram of lithofacies developed in a high permeability reservoir stratum in a specific embodiment of the present invention, and Figure 10b is a statistical histogram of sedimentary facies developed in a high permeability reservoir stratum in a specific embodiment of the present invention. From Figure 10a, it can be seen that the lithofacies developed in the high permeability reservoir stratum are mainly grainstone and grain-dominated packstone. From Figure 10b, it can be seen that the sedimentary facies developed in the high permeability reservoir stratum are mainly tidal channel and platform edge bioclastic shoal, and a few of them are shoal flank and lagoon, among which the sweet-spot sedimentary facies of tidal channel, bioclastic shoal and part of shoal flank are the mainstay of the sedimentary high permeability streaks, and other non-dessert facies, such as lagoon, swamp and shoal flank, are mostly formed by karst modification and develop karst high permeability streaks (as shown in the Table 3 below).

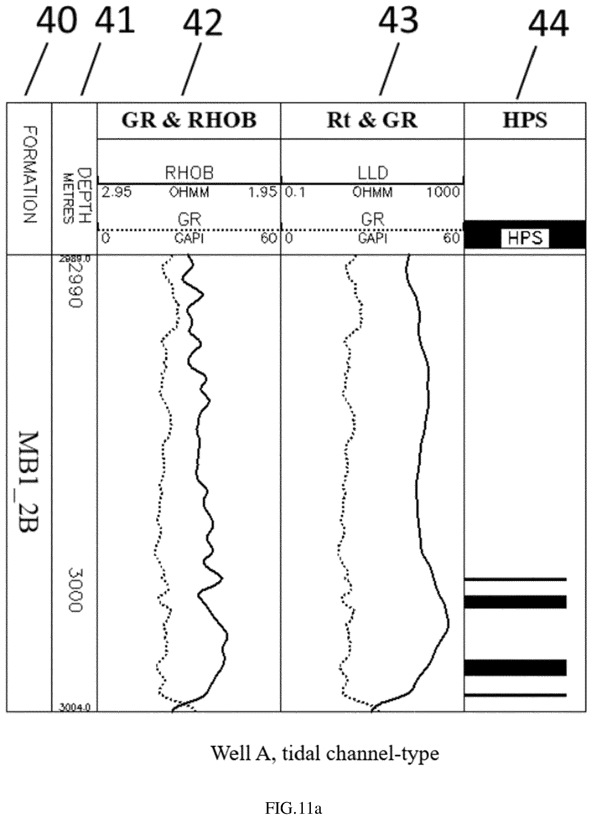

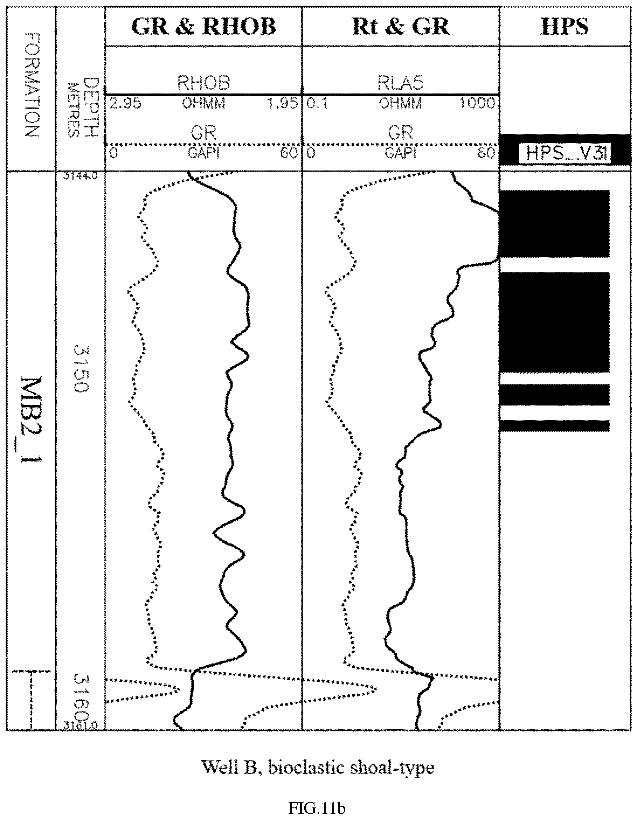

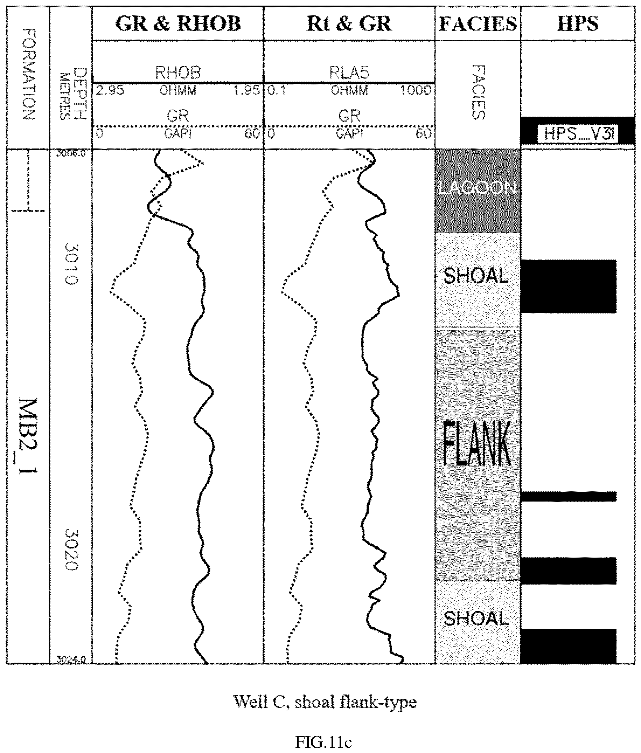

Figures 11a to 11c are schematic diagrams of the electrical characteristics and longitudinal distribution of three types of sedimentary high permeability streaks in specific embodiments. In Figure 11a, 40 represents a stratigraphic layering data track; 41 is a measure depth track; 42 is a natural gamma curve and porosity curve track; 43 is a deep resistivity and natural gamma curve track; and 44 is an HPS identification result track. Figures 11a to 11c show the same plotting structure. From Figures 11a to 11c and Table 3, it can be seen that the tidal channel is characterized by weakening upward of depositional energy and reducting and being finer upward of particles, mostly showing positive grain sequence structure; the high permeability streak are mostly developed in the lower part (Well A in Figure 11a as an example); bioclastic shoal, on the other hand, is characterized by the negative grain sequence structure, with the high permeability streak being mostly developed in the upper part (Well B in Figure 11b as an example); and the high permeability streak of the shoal flank facies are mostly developed near the shoal (Well C in Figure 11c as an example).

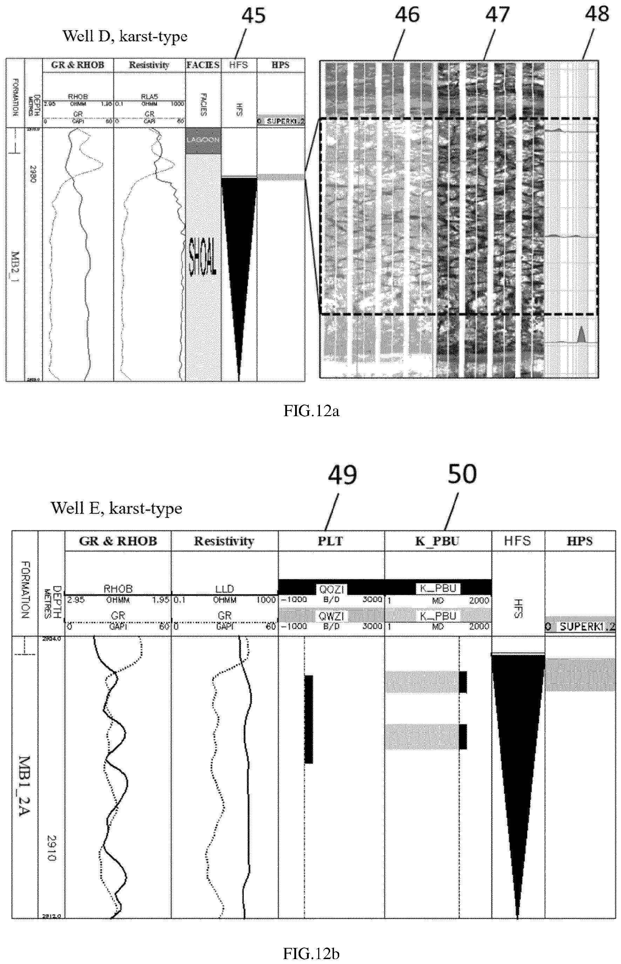

Figures 12a to 12b are schematic diagrams of the electrical characteristics and longitudinal distribution of karst high permeability streaks in specific embodiments. In Figure 12a to 12b, 45 is a sequence stratigraphic division track; 46 is an FMI static image track; 47 is an FMI dynamic image track; 48 is an NMR logging T2 spectrum track; 49 is a PLT test information track; and 50 is a dynamic permeability calculation result track. From Figures 12a to 12b, it can be seen that karst high permeability streak is mostly controlled by the stratigraphic sequence structure and depositional exposure, and are mostly developed near the stratigraphic sequence interface (see Table 3 below). FMI image logging in Well D shows that dissolution-type microfractures are developed near the stratigraphic sequence interface, and PLT test near the stratigraphic sequence interface in Well E gives higher yield and higher dynamic permeability (328 mD) although the physical properties of the reservoir matrix are poor.

Table 3. Genetic types and characteristics of high permeability streaks

| Genetic type | | Lithofacies | Sedimentary facies | Distribution pattern |
| --- | --- | --- | --- | --- |
| karst | | grainstone, packstone, wackestone | tidal channel, bioclastic shoal, shoal flank, lagoon, swamp | controlled by stratigraphic sequence structure and depositional exposure, developed near the stratigraphic sequence interface |
| high-energy sedimention | tidal channel-type | grainstone grain-dominated packstone | tidal channel | lower part of tidal channel |
| | bioclastic shoal-type | | bioclastic shoal | upper part of bioclastic shoal |
| | shoal flank-type | packstone, grainstone | shoal flank | Near the shoal |

establishing a high permeability streak logging identification mode, identifying high permeability streak on an oil reservoir-wide basis well by well according to the high permeability streak logging identification mode, and realizing oil reservoir-wide logging interpretation:

taking a PLT test section of an information well as a sample with K_PBU=100 mD as boundaries, analyzing the logging response characteristics of the high permeability streak (K_PBU≥100 mD) and non-high permeability streak (K_PBU<100 mD), and establishing a qualitative identification mode in logging facies for high permeability streak and a quantitative identification mode in conventional logging for sedimentary high permeability streak;

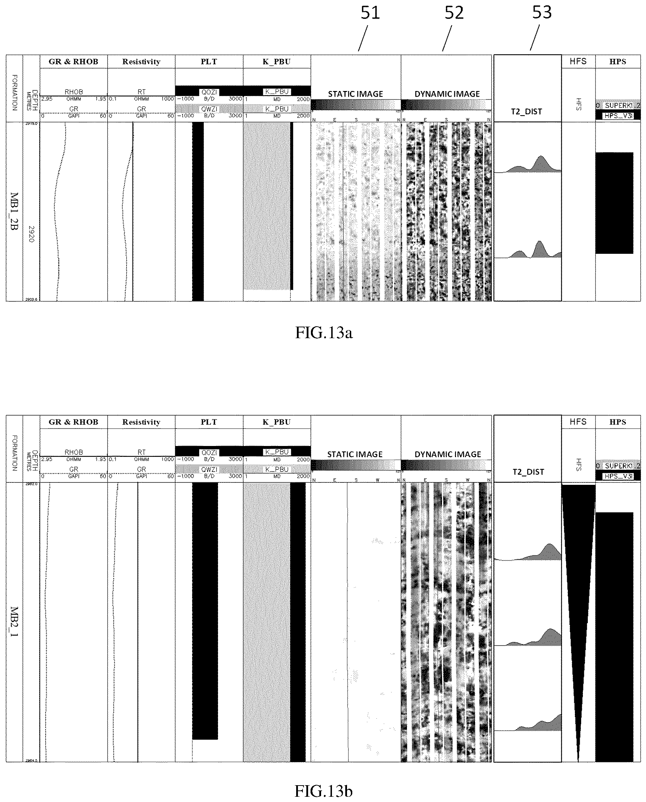

wherein establishing a qualitative identification mode in logging facies for high permeability streak comprises: analyzing the difference between the high permeability streak and the non-high permeability streak on the conventional logging curve, the FMI image logging, and the nuclear magnetic logging T2 spectrum, and establishing the qualitative identification mode in logging facies for high permeability streaks in the sedimentary reservoir stratum and the karst reservoir stratum, respectively. In the sedimentary reservoir stratum, the high permeability streaks are mostly developed in high-energy depositional environments, and most of them belong to the pore-type high permeability streaks with pure lithology, coarse grain size, high porosity and high permeability; the conventional logging curve shows low gamma, high porosity, and high resistivity, as shown in Well A in Figure 11a, Well B in Figure 11b and Well C in Figure 11c; the FMI image is light-colored, with a regular or irregular distribution of black patches, showing intergranular pores or development of larger dissolved pores; the nuclear magnetic logging T2 spectrum shows that the T2 values are characterized by double or multiple peaks, and the T2 time and energy spectrum peaks show high values, as shown in Figure 13a; in Figure 13a, 51 is a FMI static image track; 52 is a FMI dynamic image track; and 53 is a nuclear magnetic logging T2 spectrum track; from Figure 13a, it can be seen that regular dissolved pores (black patches) are developed in the sections illustrated in Well D, and the CMR logging T2 spectrum shows double-peak or multi-peak characteristics; in the karst reservoir stratum, the high permeability streaks are thin with non-obvious conventional logging features but high production, and most of them show the characteristics of "thief zone" (see Well E in Figure 12b); FMI image shows the development of sinusoidal over-well fractures or irregular microfractures (see Well D in Figure 12a), and caverns or large dissolved pores in some wells (see Figure 13b); the nuclear magnetic logging T2 spectrum shows double peaks or multiple peaks, with medium or low T2 time and energy spectrum peaks (see Well D in Figure 13b), and the high permeability streak developing caverns or large dissolved pores shows high T2 values (see Figure 13b);

wherein, the establishing quantitative identification mode in conventional logging for sedimentary high permeability streak comprises:

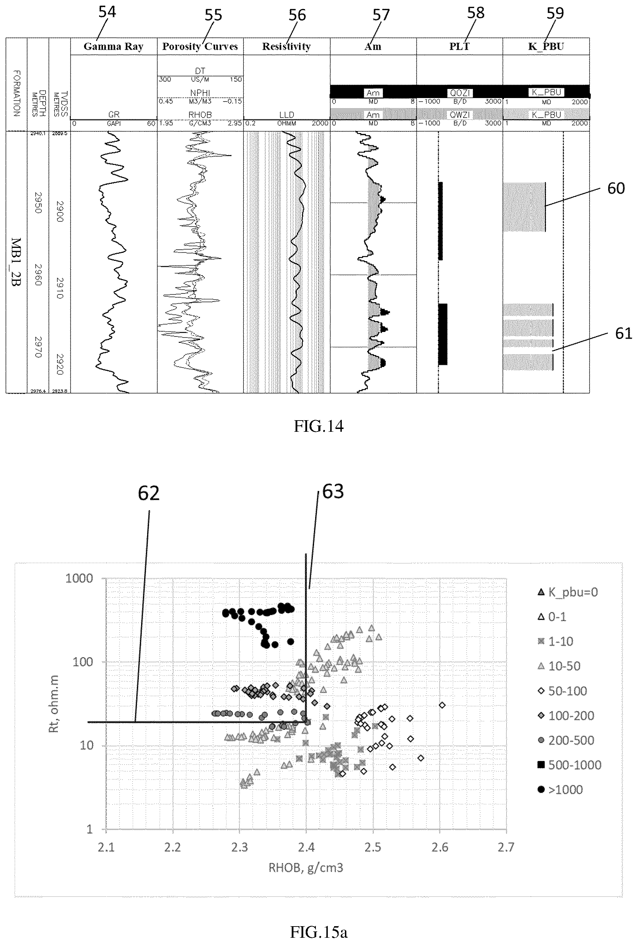

firstly, introducing a pore structure index curve reflecting reservoir stratum storage and permeability characteristics in accordance with Equation (7) as above, integratedly analyzing formation water salinity, capillary pressure curves, relative permeability curves, and displacement resistivity experiments; in a specific embodiment, it is determined that in Equation (7) $R_w$ takes the value of 0.05 ohm·m; n takes the value of 2.05; Sw in the pure oil layer takes the value of 0.1-0.3, which increases with the deterioration of the physical properties; Sw in the pure water layer takes the value of 1; and sw in the oilwater layer is interpolated according to the height of the oil column and the physical properties, and thus the porosity curve and the deep resistivity curve of logging are utilized to calculate the pore structure index curve (Am). Figure 14 is a schematic diagram of sample picking for establishing a logging interpretation model for high permeability streaks in a specific embodiment of the present invention. In Figure 14, 54 is a natural gamma curve track; 55 is a track for three porosity curves (density RHOB, neutron NPHI, and acoustic DT); 56 is a deep resistivity curve track; 57 is a calculated pore structure index curve Am track; 58 is a PLT test information track; 59 is a dynamic permeability calculation result track; and 60-61 is a rectangular curve track of the dynamic permeability of the liquid-producing section in PLT test after deducting the baffles; as shown in 57 in Figure 14, in pure oil reservoirs, the Am value increases with better reservoir permeability;

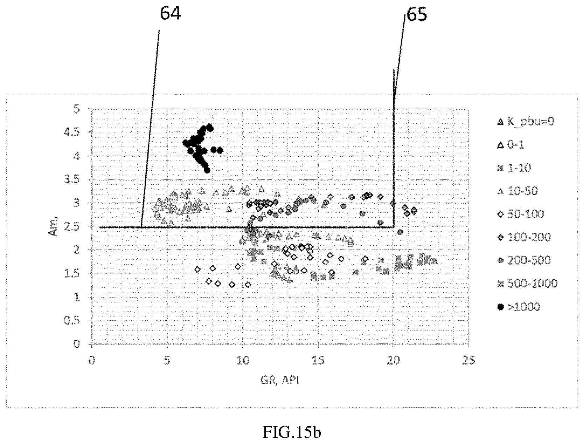

secondly, in the production logging test section (57 in Figure 14), according to the principle of superior fluid flow channel, subtracting obvious non-permeable baffles and barrires and low-permeability reservoir stratums (high gamma, high-density, low-resistivity and low-Am layers in the oil reservoirs, as shown in 61 in Figure 14), obtaining logging curve values (60-61 in Figure 14), such as a natural gamma curve (GR, 54 in Figure 14), a representative porosity curve (RHOB, 55 in Figure 14), a representative resistivity curve (Rt, 56 in Figure 16) and a pore structure index curve (Am, 57 in Figure 14), according to conventional logging curve sampling interval by sections; producing a scatter point intersection plot of double logging curve classification according to distribution intervals of K_PBU valves (in a specific embodiment, the K_PBU valves are divided into 9 intervals of 0 mD, 0-1 mD, 1-10 mD, 10-50 mD, 50-100 mD, 100-200 mD, 200-500 mD, 500-1000, >1000mD); and analyzing the distribution pattern of the logging curve values and identification limits of the high permeability streaks (K_PBU≥100 mD) in conjunction with the geological regularities, thereby establishing a quantitative identification mode in conventional logging for sedimentary high permeability streak; Figures 15a to 15b show scatter point intersection plots of the dual logging curve based on K_PBU classification in the specific embodiment; in Figures 15a to 15b, 62 is the lower limit of the resistivity of high permeability streaks; 63 is the upper limit of the RHOB, a porosity curve, of high permeability strea; 64 is the lower limit of the pore structure index curve of high permeability streaks; and 65 is the upper limit of the natural gamma curve of high permeability streaks. From Figures 15a to15b, it can be seen that the reservoir stratums with K_PBU greater than 100 mD are concentrated in the region of low density/porosity (<2.4 g/cm3), high resistivity (≥20 ohm·m), low gamma (<20 API), and high Am (≥2.5), which is consistent with the recognition of the electrical characteristics of the high-energy sedimentary high permeability reservoir stratums; accordingly, the quantitative identification mode in conventional logging for sedimentary high permeability streak is established, and the identification criteria are shown in Table 4.

Table 4. Logging identification criteria of high-energy sedimentary high permeability streaks

| GR /(API) | RHOB /(g/cm$^3$) | Rt /($\Omega$.m) | Am |
|---|---|---|---|
| <20 | <2.4 | $\geq$20 | $\geq$2.5 |

In a specific embodiment, identifying high permeability streak on an oil reservoir-wide basis well by well according to the high permeability streak logging identification mode, and realizing oil reservoir-wide logging interpretation, comprises:

quantitative logging identification of high-energy sedimentary high permeability streak: among the four curves, GR stands for the lithology and depositional environment, and its low value represents pure lithology, coarse grains and relative high energy deposition; RHOB stands for the total porosity of the rock, and its low value represents high porosity and good physical properties; Rt represents the oil stain and permeability, and its high value in the pure oil layer represents good oil stain, which indicates that the degree of oil and gas filling is high during the formation of reservoirs and thus the permeability of the reservoirs is relatively good; Am represents the pore structure, and its high value represents the complexity of the conductive paths, which is typical of the large pore-small throat type of coarse-grained sedimentary reservoir stratum. Therefore, as a high permeability streak that can form a superior fluid flow channel, all the above conditions must be satisfied, and a point-by-point screening of high-energy sedimentary high permeability streak is done with logging curves simultaneously meet the criteria "GR<20 API, RHOB<2.4 g/cm$^3$, Rt$\geq$20 ohm·m, Am$\geq$2.5";
logging facies qualitative identification: identifying and determining the high-energy sedimentary high permeability streak according to the display characteristics of "T2 spectrum showing double peak or multi-peak characteristics and T2 time and energy spectrum peaks showing high values" in the nuclear magnetic logging and "dissolved pores with larger scale and stronger degree" in the image logging; karst reservoir stratums mostly have the characteristic of "Thief zone", which is subjected to the qualitative identification based on the "development of sinusoidal over-well fractures or irregular micro-fractures, black patchy cavities or large dissolved pores" on the FMI image and the "double-peak or multi-peak characteristics" on the nuclear magnetic logging T2 spectrum;
constraints and mutual validation of geological regularities comprises: the sedimentary high permeability streaks are controlled by sedimentary facies and developed at relatively fixed sedimentary sites, and karst high permeability streaks are constrained by stratigraphic sequences and paleotectonic constraints and developed in the area near the stratigraphic interface; during the above identification process, according to the geological regularities that "tidal channel-type high permeability streaks are mostly developed in the lower part of the tidal channel, bioclastic shoal-type high permeability streaks are mostly developed in the upper part of the shoal, shoal flank-type high permeability streaks are mostly developed close to the shoal, and karst high permeability streaks are mostly developed in the vicinity of the stratigraphic interface", high permeability streaks have been validated or picked up again;

Figure 16a is a schematic diagram of single well identification results of high permeability streaks in the specific embodiment. In Figure 16a, 66 is a conventional logging GR curve; 67 shows a RHOB curve and core porosity; 68 shows a Rt curve and core permeability; 69 is a calculated Am curve; 70 is a PLT test result; 71 is a K_PBU calculation result; 72-74 is a petrophysical facies, the sedimentary facies, and the stratigraphic sequence evaluation results, respectively; 75 is the identification results of the high permeability streak; 76-77 are karst high permeability streaks (shown by the black streaks fully filled in the logging track); 78 is a high-energy sedimentary high permeability streak (shown by the gray streaks not-fully filled in the logging track); Figure 16b is a FMI image and a CMR logging $T_2$ spectrum of the karst high permeability streaks corresponding to 76 in Figure 16a, wherein 761 is a FMI static image, 762 is a FMI dynamic image, and 763 is a CMR logging $T_2$ spectrum; as can be seen in Figure 16b, microfractures and larger dissolved pores are visible in the karst high permeability streaks, and multiple peaks and high values of T2 time spectrum peaks are seen as characteristics on the CMR logging $T_2$ spectrum; Figure 16c is a FMI image and a CMR logging $T_2$ spectrum of the karst high permeability streaks corresponding to 77 in Figure 16a, wherein 771 is a FMI static image, 772 is a FMI dynamic image, and 773 is a CMR logging $T_2$ spectrum; from Figure 16c, it can be seen that the karst high permeability streak are dominated by dissolved pores with relatively small scales, and the CMR logging $T_2$ spectrum is characterized by double peaks and high values of $T_2$ time spectrum peaks; in addition, it can be seen from Figure 16c that the high-energy sedimentary high permeability streak strictly meets the logging identification conditions of low gamma, low density, high resistivity, and high Am; the karst high permeability streaks do not strictly meet the above conditions, but the development is controlled by the interface of the stratigraphic sequences, and it can be effectively identified by using the FMI image logging in combination with the CMR logging $T_2$ spectrum.

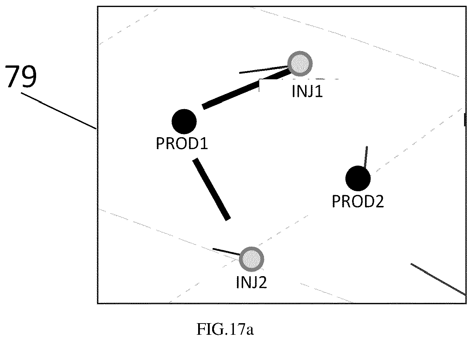

In a specific embodiment, the method further comprises: utilizing the results of core experiments of the cored wells, the production logging information and the dynamic permeability data, as well as the water breakthrough layer of the water breakthrough well in the injection-production well group and the development of high permeability streaks in the water breakthrough layer, to validate the identification results of high permeability streaks in a marine carbonate rock bioclastic limestone oil reservoir, specifically as shown in Figures 16a-16c and Figures 17a-17c;

wherein, utilizing the core experiment results of cored wells to validate the identification results of high permeability streaks in a marine carbonate rock bioclastic limestone oil reservoir comprises: among the identified high permeability streaks (75 in Figure 16a), the high-energy sedimentary high permeability streaks have a good correspondence with the high permeability portion in the core permeability, and the karst high permeability streaks correlate poorly with the core permeability, which can be seen specifically in 68 in Figure 16a;

wherein, utilizing the production logging information and the dynamic permeability data to validate the identification results of high permeability streaks in a marine carbonate rock bioclastic limestone oil reservoir comprises: the identified high permeability streaks (75 in Figure 16a) have a better correspondence with high K_PBU (>100mD) (71 in Figure 16a) and high PLT yield (70 in Figure 16a), as shown in Figures 16a to 16c; and based on the comparative analyses of the 60 PLT test wells and 24 PBU test wells, the dynamic conformity rate of the HPS identification results is about 89%;

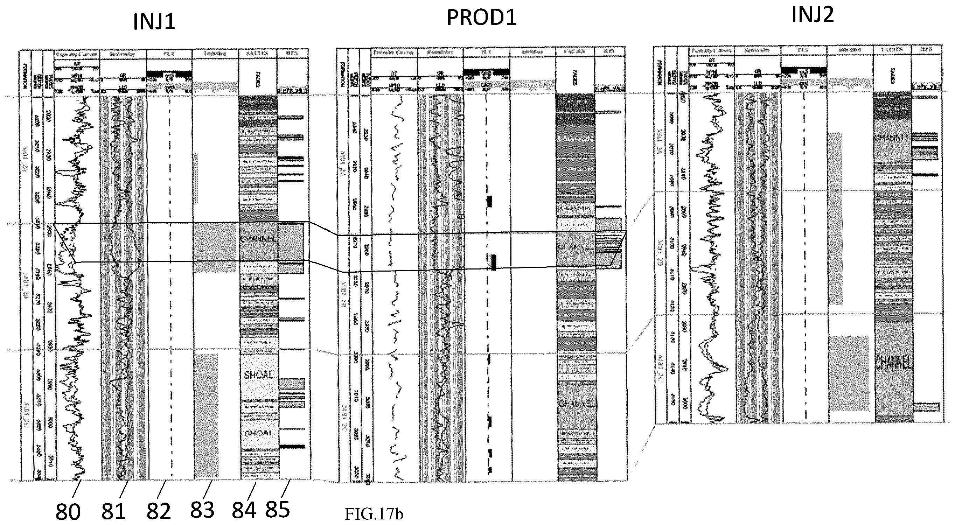

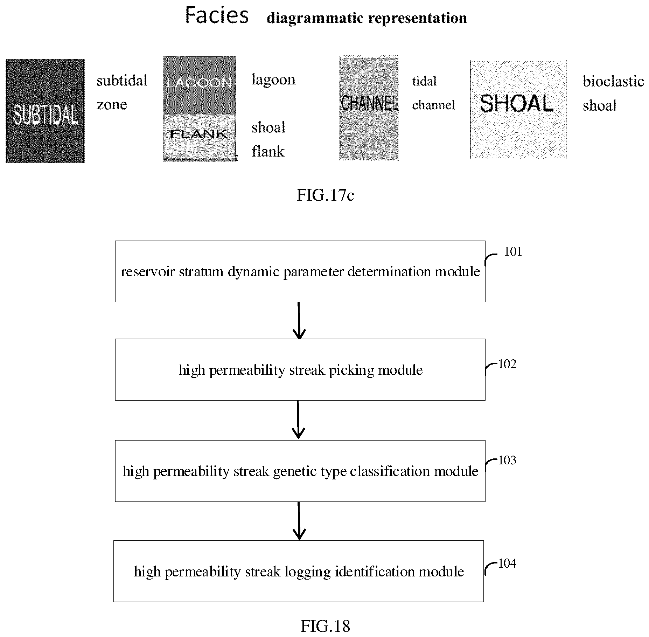

wherein, utilizing the water breakthrough layer of the water breakthrough well in the injection-production well group and the development of high permeability streaks in the water breakthrough layer to validate the identification results of high permeability streaks in a marine carbonate rock bioclastic limestone oil reservoir comprises: the high permeability streak forms an superior flowing channel for water injection, which is usually the first to realize the water breakthrough in the injection-production well group and thus is the main reason why the injected water emerges in production wells. Figures 17a to 17c are schematic diagrams for analysis of water breakthrough wells in PROD1 injection-production well group in specific embodiments, wherein the mark 79 in Figure 17a is a well location map of the injection-production well group; Figure 17b is the well correlation profile of two injection wells (INJ1, INJ2) and one production well (PROD1), wherein 80-81 show three conventional curves: a porosity curve, a natural gamma curve, and a resistivity curve; 82 is the oil and water production profile of PLT test; 83 is the water absorption profile of the injection well; 84 is the sedimentary microfacies profile; and 85 is an HPS identification result; Figure 17c is a lagend of the sedimentary microfacies corresponding to 84 in Figure 17b; from Figures 17a to 17c, there are two injection wells around the production well PROD1, and the injection layers include MB1-2A to MB1-2C, and the current water breakthrough layer is located in the upper part of MB1-2B, which develops a tidal channel-type high permeability streak, he same as the injection well INJ1, and the two high permeability streaks connects with each other to form a superior fluid flow channel, resulting in the earliest water breakthrough; the current producers with water breakthrough involve 16 wells in 9 injection-production well groups, and the proportion of injection wells related to the high permeability streak reaches 85%, which on the one hand indicates that the water breakthrough in the current injection-production groups is mainly related to the high permeability streak, and on the other hand indicates that the compliance rate of the injection-production relationship related to the identified high permeability streak is more than 85%, which is basically in line with the results of the PLT and PBU tests.

Based on the same inventive concept, the embodiments of the present invention also provide an apparatus for identifying high permeability streaks in a marine carbonate rock bioclastic limestone oil reservoir. Since the principle of problem solving of the apparatus is similar to that of the method for identifying high permeability streaks in marine carbonate rock bioclastic limestone oil reservoirs, the implementation of the apparatus can be referred to the implementation of the method, and the description will not be repeated. As used hereinafter, the term "unit" or "module" may be a combination of software and/or hardware that implements a predetermined function. The apparatus described in the following embodiments is preferably implemented in hardware, but implementations in software or a combination of software and hardware are also possible and contemplated.

Figure 18 is a schematic diagram of the structure of an apparatus for identifying high permeability streaks in a marine carbonate rock bioclastic limestone oil reservoir provided in an embodiment of the present invention. From Figure 1, it can be seen that the apparatus comprises:

a reservoir stratum dynamic parameter determination module 101 for determining a single-layer dynamic permeability and a single-layer specific liquid productivity index of a single-well flow unit based on well test information and production logging information;

a high permeability streak picking module 102 for analyzing the interlayer interference in the multi-layer commingled production based on the production logging information, establishing a high permeability streak dynamic standard by integrating the single-layer yield in the production logging information and the single-layer dynamic permeability and the single-layer specific liquid productivity index of the single-well flow unit, and picking the high permeability streaks in a single well;

a high permeability streak genetic type classification module 103 for classifying the genetic types of the high permeability reservoir stratum in the cored wells based on the results obtained from the study of stratigraphic sequences, lithofacies, sedimentary facies and petrophysical facies, and determining the distribution pattern of the high permeability streaks in the lithofacies, the sedimentary facies and the stratigraphic interface;

a high permeability streak logging identification module 104 for establishing a high permeability streak logging identification mode, identifying high permeability streak on an oil reservoir-wide basis well by well according to the high permeability streak logging identification mode, and realizing oil reservoir-wide logging interpretation.

In an embodiment, the well test information is PBU information, and the production logging information is PLT test information.

In an embodiment, the reservoir stratum dynamic parameter determination module comprises a single-layer specific liquid productivity index determination unit for determining a single-layer specific liquid productivity index (SPI) based on well test information and production logging information according to the following Equation (1):

$$SPI = \frac{q_o}{\Delta P \times h} \qquad \text{Equation (1);}$$

in Equation (1), SPI is the specific liquid productivity index in bb1/(d·psi·m); $q_o$ is the daily liquid productivity in bbl/d; $\Delta P$ is the bottom hole pressure difference in psi; and h is the thickness of the liquid-producing layer in m.

In an embodiment, the reservoir stratum dynamic parameter determination module further comprises a single-layer dynamic permeability determination unit; for the case of a single-layer well test, when the well test information is PBU information, the single-layer dynamic permeability determination unit is used for determining the single-layer dynamic permeability of the single-well flow unit based on the PBU information, comprising:

1) determining the formation coefficient of this single well based on the interpretation of the PBU information in accordance with equation (2) below;

$$kh = \frac{q\mu}{4\pi m} \qquad \text{Equation (2);}$$

in Equation (2): $kh$ is the formation coefficient of the single well interpreted by the PBU data in mD·m; $q$ is the PBU test yield in m$^3$/ks; $\mu$ is the liquid viscosity in mPa·s; $m$ is the slope of the Horner curve used in the interpretation of the PBU information, with no factor; $h$ is the thickness of the flow unit in m; and $k$ is the single-layer dynamic permeability of the single-well flow unit in mD;

2) determining the thickness of the flow unit on the logging curve, and then dividing the formation coefficient of the single well by the thickness of the flow unit to obtain the single-layer dynamic permeability of the single-well flow unit;

for the case of a commingled-production well test, when the well test information is PBU information and the production logging information is PLT test information, single-layer dynamic permeability determination unit is used for determining the single-layer dynamic permeability of the single-well flow unit based on the PBU information and the PLT test information, comprising:

1) determining the integrated formation coefficient of the single well based on the interpretation of the PBU data in accordance with Equation (2) above;

2) dividing the integrated formation coefficient of the single well into each flow unit using the stratified liquid productivity from the PLT test information in accordance with the following Equation (3)-Equation (5), to obtain the single-layer formation coefficient of each flow unit;

$$q_t = q_1 + q_2 + q_3 + \cdots + q_l \qquad \text{Equation (3);}$$

$$ratio_l = \frac{q_l}{q_t} \qquad \text{Equation (4);}$$

$$(kh)_l = (kh) \times ration_l \qquad \text{Equation (5);}$$

in Equation (3)-Equation (5), $q_t$ is the cumulative liquid production in PLT test information in bbl/d; $q_1$, $q_2$, $q_3$, ......$q_l$ are the actual liquid production of different liquid-producing sections in PLT test information, respectively, in bbl/d; $ration_l$ is the ratio of the actual liquid production in different liquid-producing sections in PLT test information to the cumulative liquid production in PLT test information, in units of no factor; $kh$ is the formation coefficient interpreted by PBU data, i.e., the integrated formation coefficient of this single well in mD·m; and $(kh)_l$ is the single-layer formation coefficient of each flow unit in mD-m;

3) then determining the single-layer dynamic permeability of each flow unit of the single wall based on the single-layer formation coefficient of each flow unit and the thickness of each flow unit in accordance with Equation (6) below;

$$k_l = \frac{(kh)_l}{h_l} \qquad\qquad \text{Equation (6);}$$

in Equation (6), $k_l$ is the single-layer dynamic permeability of the flow unit in mD; $(kh)_l$ is the single-layer formation coefficient of each flow unit in mD·m; $h_l$ is the actual thickness of the liquid-producing section of the flow unit in the PLT test information in m; and $l$ is the number of sections in the actual liquid-producing section in the PLT test information as a positive integer.

In an embodiment, the reservoir stratum dynamic parameter determination module further comprises a thickness determination unit of the flow unit for determining the thickness of the flow unit, comprising:
deducting the internal baffles and barrires of the unit using the logging curve inside the flow unit shown in the PLT test information; and then correcting the thickness of the flow unit to the plumb depth by well trajectory calculation, to obtain the thickness of the flow unit.

In an embodiment, the high permeability streak picking module is specifically used for:
establishing a scatter point intersection plot of the single-layer dynamic permeability and the single-layer specific liquid productivity index of the single-well flow unit, analyzing the productivity of the flow unit, i.e., the trend of the specific liquid productivity index as a function of the dynamic permeability and determining an inflection point, and determining the dynamic permeability and the liquid productivity index corresponding to the inflection point as a dynamic identification criteria for the high permeability streaks in a marine carbonate rock bioclastic limestone oil reservoir.

In an embodiment, the high permeability streak picking module further comprises a single-well high permeability streak picking unit for picking the high permeability streaks in the single well in a stratified manner according to the dynamic identification criteria, which is specifically used for:
on basis of deducting the internal baffles and barrires of the flow unit, drawing rectangular curves of the dynamic permeability and the specific liquid productivity index respectively using the data of the single-layer dynamic permeability and the single-layer specific liquid productivity index of the single-well flow unit determined by sections, and setting the single-layer dynamic permeability and the single-layer specific liquid productivity index in the dynamic standard of the high permeability streak as the baseline of the rectangular curves and filling them from the right side of the baseline to the rectangular curves; and when both the dynamic permeability and the specific liquid productivity index of a single layer are greater than the dynamic permeability and the specific liquid productivity index corresponding to the baseline of the rectangular curve, the single layer is determined to be a high permeability streak.

In an embodiment, the high permeability streak genetic type classification module is specifically used for:
utilizing the petrophysical facies classification of the high permeability reservoir stratum or the single well high permeability streak data from the cored wells, analyzing the types of lithofacies and sedimentary facies in which the high permeability reservoir stratum or high permeability streak is developed by means of a scatter point intersection plot or a frequency histogram; and at the same time, in conjunction with the results of the classification of the sedimentary microfacies and stratigraphic sequences, analyzing the location of the high permeability streaks in the sedimentary facies and stratigraphic sequences.

In an embodiment, the high permeability streak logging identification module is specifically used for:
taking a single well production logging test section as a sample and taking the single-layer dynamic permeability and the single-layer specific liquid productivity index corresponding to the dynamic standard of the high permeability streak as boundaries, analyzing the logging response characteristics of the high permeability streak and non-high permeability streak, and establishing a qualitative identification mode in logging facies for high permeability streak and a quantitative identification mode in conventional logging for sedimentary high permeability streak.

In an embodiment, the high permeability streak logging identification module comprises an establishing unit of the qualitative identification mode in logging facies for high permeability streak, which is used for:
analyzing the difference between the high permeability streak and the non-high permeability streak on the conventional logging curve, the FMI image logging, and the nuclear magnetic logging T2 spectrum, and establishing the qualitative identification mode in logging facies for high permeability streaks in the sedimentary reservoir stratum and the karst reservoir stratum, respectively, based on the results obtained from the analysis.

In an embodiment, the high permeability streak logging identification module further comprises an establishing unit of quantitative identification mode in conventional logging for sedimentary high permeability streak, which is used for: in the production logging test section, according to the principle of superior fluid flow channel, subtracting obvious non-permeable baffles and barries and low-permeability reservoir stratums, obtaining logging curve values according to conventional logging curve sampling interval in sections; producing a scatter point intersection plot of double logging curve classification according to the dynamic permeability distribution interval; and analyzing the distribution pattern of the logging curve values and identification limits of the high permeability streaks in conjunction with the geological regularities, thereby establishing a quantitative identification mode in conventional logging for sedimentary high permeability streak.

In an embodiment, the high permeability streak logging identification mode further comprises a curve value calculation unit of the pore structure index curve, which is used for:

when the logging curve includes a pore structure index curve, a curve value of the pore structure index curve is calculated in accordance with the following Equation (7):

$$Am = \frac{\log(Rw) - \log(Rt) - n \times \log(Sw)}{\log(POR)} \qquad \text{Equation (7);}$$

in Equation (7), $R_w$ is the formation water resistivity in ohm·m; $R_t$ is the undisturbed formation resistivity which is corresponding to the deep resistivity curve on the logging curve, in ohm·m; *POR* is the reservoir stratum porosity in unfactored decimal degrees; Sw is the formation water saturation in unfactored decimal degrees; and n is the saturation index in unfactored decimal degrees.

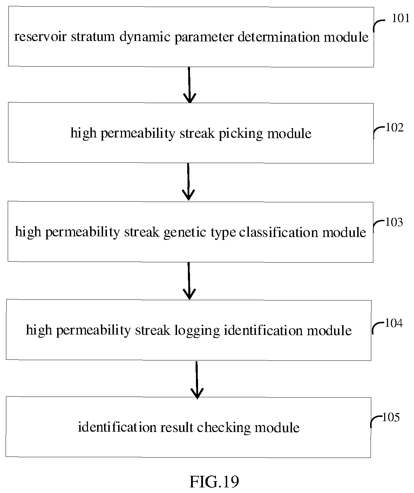

In an embodiment, the apparatus (as shown in Figure 19) further comprises an identification result checking module 105 for utilizing the results of core experiments of the cored wells, the production logging information and the dynamic permeability data, as well as the water breakthrough layer of the water breakthrough well in the injection-production well group and the development of high permeability streaks in the water breakthrough layer, to validate the identification results of high permeability streaks in a marine carbonate rock bioclastic limestone oil reservoir.

An embodiment of the present invention further provides a computer apparatus comprising a memory, a processor and a computer program stored on the memory and runnable on the processor, wherein the processor when executing the computer program realizes the steps of the above-described method for identifying high permeability streaks in a marine carbonate rock bioclastic limestone oil reservoir.

An embodiment of the present invention further provides a computer readable storage medium having a computer program stored thereon, wherein the computer program when being executed by the processor realizes the steps of the above-described method for identifying high permeability streaks in a marine carbonate rock bioclastic limestone oil reservoir.

In conclusion, the present invention takes the dynamic production as the key and provides a static-dynamic integrated method and apparatus for identifying the high permeability streaks in a marine carbonate rock bioclastic limestone oil reservoir under the constraints of geologic regularities. The theoretical basis and technical logic of the method and apparatus provided by the present invention are solid and reliable, and the method is simple and easy to operate. The objects of the method and apparatus provided by the present invention include but are not limited to thief zones, and the method and apparatus can effectively solve the problem of identifying high-energy sedimentary high permeability streaks in a marine carbonate rock bioclastic limestone oil reservoir, which has the greatest influence on the development of water injection. The method and apparatus provided by the present invention can provide a set of reliable high permeability streaks information covering the whole oil reservoir after being popularized and applied in the oilfields, and it has been verified that all the early water breakthrough wells in the current water injection well group have been related to the high permeability streak identified by the method and apparatus of the present invention, which provide technical support for the optimization design of new injection-production well group.

It should be appreciated by a person skilled in the art that embodiments of the present invention may be provided as methods, systems, or computer program products. Thus, the present invention may take the form of a fully hardware embodiment, a fully software embodiment, or an embodiment that combines software and hardware. Further, the present invention may take the form of a computer program product implemented on one or more computer-usable storage media (including, but not limited to, disk memory, CD-ROM, optical memory, and the like) that contain computer-usable program code therein.

The present invention is described with reference to flowcharts and/or block diagrams of methods, apparatus (systems), and computer program products according to embodiments of the present invention. It should be understood that each of the processes and/or boxes in the flowchart and/or block diagram, and the combination of processes and/or boxes in the flowchart and/or block diagram, may be implemented by computer program instructions. These computer program instructions may be provided to a processor of a general-purpose computer, a specialized computer, an embedded processor, or other programmable information processing apparatus to produce a machine. As a result, the instructions executed by the processor of the computer or other programmable information processing apparatus produce a machine for implementing the functions specified in one or more processes of a flowchart and/or one or more boxes of a block diagram.

These computer program instructions may also be stored in computer-readable memory capable of directing a computer or other programmable information processing apparatus to operate in a particular manner such that the instructions stored in that computer-readable memory produce an article of manufacture comprising an instruction apparatus, and the instruction apparatus implements functions specified in one or more processes of a flowchart and/or one or more boxes of a block diagram.

These computer program instructions may also be loaded onto a computer or other programmable information processing apparatus such that a series of operational steps are performed on the computer or other programmable apparatus to produce computer-implemented processing. Thus, the instructions executed on the computer or other programmable apparatus provide steps for implementing the functions specified in the one or more processes of a flowchart and/or the one or more boxes of a box diagram.

The above mentioned are only specific embodiments of the present invention and cannot be used to limit the scope of the invention. Therefore, the replacement of equivalent components or equivalent changes and modifications in accordance with the scope of patent protection of the present invention should still fall within the scope of the present patent. In addition, free combinations can be made between technical features and technical features, between technical features and technical inventions, and between technical inventions and technical inventions in the present invention.

**Claims**

1. A method for identifying high permeability streaks in a marine carbonate rock bioclastic limestone oil reservoir, wherein the method comprises:

   determining a single-layer dynamic permeability and a single-layer specific liquid productivity index of a single-well flow unit, based on well test information and production logging information;
   analyzing the interlayer interference in the multi-layer commingled production based on the production logging information, establishing a high permeability streak dynamic standard by integrating the single-layer yield in the production logging information and the single-layer dynamic permeability and the single-layer specific liquid productivity index of the single-well flow unit, and picking the high permeability streaks in a single well;
   classifying the genetic types of the high permeability reservoir stratum in the cored wells based on the results obtained from the study of stratigraphic sequences, lithofacies, sedimentary facies and petrophysical facies, and determining the distribution pattern of the high permeability streaks in the lithofacies, the sedimentary facies and the stratigraphic interface;
   establishing a high permeability streak logging identification mode, identifying high permeability streak on a whole oil reservoir-wide basis, well by well, according to the high permeability streak logging identification mode, and realizing oil reservoir-wide logging interpretation.

2. The method according to claim 1, wherein the well test information is PBU information, and the production logging information is PLT test information.

3. The method according to claim 1 or 2, wherein the single-layer specific liquid productivity index (SPI) is determined based on the well test information and the production logging information according to the following Equation (1):

$$\text{SPI} = \frac{q_o}{\Delta P \times h} \qquad \qquad \text{Equation (1);}$$

   in Equation (1), SPI is the specific liquid productivity index in bb1/(d·psi·m); $q_o$ is the daily liquid productivity in bbl/d; $\Delta P$ is the bottom hole pressure difference (production differential pressure) in psi; and h is the thickness of the liquid-producing layer in m.

4. The method according to claim 1 or 2, wherein for the case of a single-layer well test, when the well test information is PBU information, the determination of the single-layer dynamic permeability of the single-well flow unit based on the PBU information comprises:

1) determining the formation coefficient of this single well based on the interpretation of the PBU information in accordance with equation (2) below;

$$kh = \frac{q\mu}{4\pi m} \qquad \text{Equation (2)};$$

in Equation (2): $kh$ is the formation coefficient of the single well interpreted by the PBU data in mD·m; $q$ is the PBU test yield in m$^3$/ks; $\mu$ is the liquid viscosity in mPa·s; $m$ is the slope of the Horner curve used in the interpretation of the PBU information, with no factor; $h$ is the thickness of the flow unit in m; and $k$ is the single-layer dynamic permeability of the single-well flow unit in mD;
2) determining the thickness of the flow unit on the logging curve, and then dividing the formation coefficient of the single well by the thickness of the flow unit to obtain the single-layer dynamic permeability of the single-well flow unit;

for the case of a commingled-production well test, when the well test information is PBU information and the production logging information is PLT test information, the determination of the single-layer dynamic permeability of the single-well flow unit based on the PBU information and the PLT test information, comprises:

1) determining the integrated formation coefficient of the single well based on the interpretation of the PBU data in accordance with Equation (2) above;
2) dividing the integrated formation coefficient of the single well into each flow unit using the stratified liquid productivity from the PLT test information in accordance with the following Equation (3)-Equation (5), to obtain the single-layer formation coefficient of each flow unit;

$$q_t = q_1 + q_2 + q_3 + \cdots + q_l \qquad \text{Equation (3)};$$

$$ratio_l = \frac{q_l}{q_t} \qquad \text{Equation (4)};$$

$$(kh)_l = (kh) \times ration_l \qquad \text{Equation (5)};$$

in Equation (3)-Equation (5), $q_t$ is the cumulative liquid production in PLT test information in bbl/d; $q_1$, $q_2$, $q_3$, ......$q_l$ are the actual liquid production of different liquid-producing sections in PLT test information, respectively, in bbl/d; $ration_l$ is the ratio of the actual liquid production in different liquid-producing sections in PLT test information to the cumulative liquid production in PLT test information, in units of no factor; $kh$ is the formation coefficient interpreted by PBU data, i.e., the integrated formation coefficient of this single well in mD·m; and $(kh)_l$ is the single-layer formation coefficient of each flow unit in mD-m;
3) then determining the single-layer dynamic permeability of each flow unit of the single wall based on the single-layer formation coefficient of each flow unit and the thickness of each flow unit in accordance with Equation (6) below;

$$k_l = \frac{(kh)_l}{h_l} \qquad \text{Equation (6)};$$

in Equation (6), $k_l$ is the single-layer dynamic permeability of the flow unit in mD; $(kh)_l$ is the single-layer formation coefficient of each flow unit in mD·m; $h_l$ is the actual thickness of the liquid-producing section of the flow unit in the PLT test information in m; and $l$ is the number of sections in the actual liquid-producing section in the PLT test information and is a positive integer.

5. The method according to claim 4, wherein determining the thickness of the flow unit comprises:
deducting the internal baffles and barrires of the unit using the logging curve inside the flow unit shown in the PLT test information; and then correcting the thickness of the flow unit to the plumb depth by well trajectory calculation, to obtain the thickness of the flow unit.

6. The method according to claim 1 or 2, wherein establishing a high permeability streak dynamic standard by integrating the single-layer yield in the production logging information and the single-layer dynamic permeability and the single-layer specific liquid productivity index of the single-well flow unit comprises:
establishing a scatter point intersection plot of the single-layer dynamic permeability and the single-layer specific liquid productivity index of the single-well flow unit, analyzing the productivity of the flow unit, i.e., the trend of the specific liquid productivity index as a function of the dynamic permeability and determining an inflection point, and determining the dynamic permeability and the liquid productivity index corresponding to the inflection point as a dynamic identification criteria for the high permeability streaks in a marine carbonate rock bioclastic limestone oil reservoir.

7. The method according to claim 1 or 6, wherein picking the high permeability streaks in a single well comprises:
picking the high permeability streaks in the single well in a stratified manner according to the dynamic identification criteria, specifically comprises:
on basis of deducting the internal baffles and barrires of the flow unit, drawing rectangular curves of the dynamic permeability and the specific liquid productivity index, respectively, using the data of the single-layer dynamic permeability and the single-layer specific liquid productivity index of the single-well flow unit determined by sections, and setting the single-layer dynamic permeability and the single-layer specific liquid productivity index in the dynamic standard of the high permeability streak, as the baseline of the rectangular curves and filling them from the right side of the baseline to the rectangular curves; and when both the dynamic permeability and the specific liquid productivity index of this single layer are greater than the dynamic permeability and the specific liquid productivity index corresponding to the baseline of the rectangular curve, the single layer is determined to be a high permeability streak.

8. The method according to claim 1 or 2, wherein classifying the genetic types of the high permeability reservoir stratum, based on the study results of stratigraphic sequences, lithofacies, sedimentary facies and petrophysical facies, and determining the distribution pattern of the high permeability streaks in the lithofacies, the sedimentary facies and the stratigraphic interface comprises:
by utilizing the petrophysical facies classification of the high permeability reservoir stratum or the single well high permeability streak data from the cored wells, analyzing the types of lithofacies and sedimentary facies in which the high permeability reservoir stratum or high permeability streak is developed by means of a scatter point intersection plot or a frequency histogram; and at the same time, in conjunction with the results of the classification of the sedimentary microfacies and stratigraphic sequences, analyzing the location of the high permeability streaks in the sedimentary facies and stratigraphic sequences.

9. The method according to claim 1 or 2, wherein the establishing a high permeability streak logging identification mode comprises:
taking a single well production logging test section as a sample, and taking the single-layer dynamic permeability and the single-layer specific liquid productivity index corresponding to the dynamic standard of the high permeability streak as boundaries, analyzing the logging response characteristics of the high permeability streak and non-high permeability streak, and establishing a qualitative identification mode in logging facies for high permeability streak and a quantitative identification mode in conventional logging for sedimentary high permeability streak.

10. The method according to claim 9, wherein the establishing a qualitative identification mode in logging facies for high permeability streak comprises:
analyzing the difference between the high permeability streak and the non-high permeability streak in term of the conventional logging curve, the FMI image logging, and the nuclear magnetic logging T2 spectrum, and establishing the qualitative identification mode in logging facies for high permeability streaks in the sedimentary reservoir stratum and the karst reservoir stratum, respectively, based on the results obtained from the analysis.

11. The method according to claim 9, wherein establishing a quantitative identification mode in conventional logging for sedimentary high permeability streak comprises:
in the production logging test section, according to the principle of superior fluid flow channel, subtracting obvious non-permeable baffles and barrires and low-permeability reservoir stratums, obtaining logging curve values according to conventional logging curve sampling interval; producing a scatter point intersection plot of double logging curve classification according to the dynamic permeability distribution interval; and analyzing the distribution pattern of the logging curve values and identification limits of the high permeability streaks in conjunction with the geological regularities, thereby establishing a quantitative identification mode in conventional logging for sedimentary high permeability streak.

12. The method according to claim 11, when the logging curve includes a pore structure index curve, a curve value of the pore structure index curve is calculated in accordance with the following Equation (7):

$$Am = \frac{\log(Rw) - \log(Rt) - n \times \log(Sw)}{\log(POR)} \qquad \text{Equation (7);}$$

in Equation (7), $R_w$ is the formation water resistivity in ohm·m; $R_t$ is the undisturbed formation resistivity which is corresponding to the deep resistivity curve on the logging curve, in ohm·m; $POR$ is the reservoir stratum porosity in unfactored decimal degrees; Sw is the formation water saturation in unfactored decimal degrees; and n is the saturation index in unfactored decimal degrees.

13. The method according to any one of claims 1 to 12, wherein the method further comprises: utilizing the results of core experiments of the cored wells, the production logging information and the dynamic permeability data, as well as the water breakthrough layer of the water breakthrough well in the injection-production well group and the development of high permeability streaks in the water breakthrough layer, to validate the identification results of high permeability streaks in a marine carbonate rock bioclastic limestone oil reservoir.

14. An apparatus for identifying high permeability streaks in a marine carbonate rock bioclastic limestone oil reservoir, wherein the apparatus comprises:

a reservoir stratum dynamic parameter determination module for determining a single-layer dynamic permeability and a single-layer specific liquid productivity index of a single-well flow unit based on well test information and production logging information;
a high permeability streak picking module for analyzing the interlayer interference in the multi-layer multi-layer commingled production based on the production logging information, establishing a high permeability streak dynamic standard by integrating the single-layer yield in the production logging information and the single-layer dynamic permeability and the single-layer specific liquid productivity index of the single-well flow unit, and picking the high permeability streaks in a single well;
a high permeability streak genetic type classification module for classifying the genetic types of the high permeability reservoir stratum in the cored wells based on the results obtained from the study of stratigraphic sequences, lithofacies, sedimentary facies and petrophysical facies, and determining the distribution pattern of the high permeability streaks in the lithofacies, the sedimentary facies and the stratigraphic interface;
a high permeability streak logging identification module for establishing a high permeability streak logging identification mode, identifying high permeability streak on a whole oil reservoir-wide basis well by well according to the high permeability streak logging identification mode, and realizing oil reservoir-wide logging interpretation.

15. The apparatus according to claim 14, wherein the well test information is PBU information, and the production logging information is PLT test information.

16. The apparatus according to claim 14 or 15, wherein the reservoir stratum dynamic parameter determination module comprises a single-layer specific liquid productivity index determination unit for determining the single-layer specific liquid productivity index (SPI) based on the well test information and the production logging information according to the following Equation (1):

$$SPI = \frac{q_o}{\Delta P \times h} \qquad \text{Equation (1);}$$

in Equation (1), SPI is the specific liquid productivity index in bb1/(d·psi·m); $q_o$ is the daily liquid productivity in bbl/d; $\Delta P$ is the bottom hole pressure difference in psi; and h is the thickness of the liquid-producing layer in m.

17. The apparatus according to claim 14 or 15, wherein the reservoir stratum dynamic parameter determination module further comprises a single-layer dynamic permeability determination unit; for the case of a single-layer well test, when the well test information is PBU information, the single-layer dynamic permeability determination unit is used for determining the single-layer dynamic permeability of the single-well flow unit based on the PBU information, comprising:

1) determining the formation coefficient of this single well based on the interpretation of the PBU information in accordance with equation (2) below;

$$kh = \frac{q\mu}{4\pi m} \qquad \text{Equation (2);}$$

in Equation (2): $kh$ is the formation coefficient of the single well interpreted by the PBU data in mD·m; $q$ is the PBU test yield in m³/ks; $\mu$ is the liquid viscosity in mPa·s; $m$ is the slope of the Horner curve used in the interpretation of the PBU information, with no factor; $h$ is the thickness of the flow unit in m; and $k$ is the single-layer dynamic permeability of the single-well flow unit in mD;
2) determining the thickness of the flow unit on the logging curve, and then dividing the formation coefficient of the single well by the thickness of the flow unit to obtain the single-layer dynamic permeability of the single-well flow unit;

for the case of a commingled-production well test, when the well test information is PBU information and the production logging information is PLT test information, single-layer dynamic permeability determination unit is used for determining the single-layer dynamic permeability of the single-well flow unit based on the PBU information and the PLT test information, comprising:

1) determining the integrated formation coefficient of the single well based on the interpretation of the PBU data in accordance with Equation (2) above;
2) dividing the integrated formation coefficient of the single well into each flow unit using the stratified liquid productivity from the PLT test information in accordance with the following Equation (3)-Equation (5), to obtain the single-layer formation coefficient of each flow unit;

$$q_t = q_1 + q_2 + q_3 + \cdots + q_l \qquad \text{Equation (3);}$$

$$ratio_l = \frac{q_l}{q_t} \qquad \text{Equation (4);}$$

$$(kh)_l = (kh) \times ration_l \qquad \text{Equation (5);}$$

in Equation (3)-Equation (5), $q_t$ is the cumulative liquid production in PLT test information in bbl/d; $q_1$, $q_2$, $q_3$, ......$q_l$ are the actual liquid production of different liquid-producing sections in PLT test information respectively, in bbl/d; $ration_l$ is the ratio of the actual liquid production in different liquid-producing sections in PLT test information to the cumulative liquid production in PLT test information, in units of no factor; $kh$ is the formation coefficient interpreted by PBU data, i.e., the integrated formation coefficient of this single well in mD·m; and $(kh)_l$ is the single-layer formation coefficient of each flow unit in mD-m;
3) then determining the single-layer dynamic permeability of each flow unit of the single wall based on the single-layer formation coefficient of each flow unit and the thickness of each flow unit in accordance with Equation (6) below;

$$k_l = \frac{(kh)_l}{h_l} \qquad \text{Equation (6);}$$

in Equation (6), $k_l$ is the single-layer dynamic permeability of the flow unit in mD; $(kh)_l$ is the single-layer formation coefficient of each flow unit in mD·m; $h_l$ is the actual thickness of the liquid-producing section of the flow unit in the PLT test information in m; and $l$ is the number of sections in the actual liquid-producing section in the PLT test information and is a positive integer.

**18.** The apparatus according to claim 17, wherein the reservoir stratum dynamic parameter determination module further comprises a thickness determination unit of the flow unit for determining the thickness of the flow unit, comprising: deducting the internal baffles and barrires of the unit using the logging curve inside the flow unit shown in the PLT test information; and then correcting the thickness of the flow unit to the plumb depth by well trajectory calculation, to obtain the thickness of the flow unit.

**19.** The apparatus according to claim 14 or 15, wherein the high permeability streak picking module is specifically used for: establishing a scatter point intersection plot of the single-layer dynamic permeability and the single-layer specific liquid productivity index of the single-well flow unit, analyzing the productivity of the flow unit, i.e., the trend of the specific liquid productivity index as a function of the dynamic permeability and determining an inflection point, and determining the dynamic permeability and the liquid productivity index corresponding to the inflection point as a dynamic identification criteria for the high permeability streaks in a marine carbonate rock bioclastic limestone oil reservoir.

**20.** The apparatus according to claim 14 or 19, wherein the high permeability streak picking module further comprises a single-well high permeability streak picking unit for picking the high permeability streaks in the single well in a stratified manner according to the dynamic identification criteria, which is specifically used for:
on basis of deducting the internal baffles and barrires of the flow unit, drawing rectangular curves of the dynamic permeability and the specific liquid productivity index respectively using the data of the single-layer dynamic permeability and the single-layer specific liquid productivity index of the single-well flow unit determined by sections, and setting the single-layer dynamic permeability and the single-layer specific liquid productivity index in the dynamic standard of the high permeability streak as the baseline of the rectangular curves and filling them from the right side of the baseline to the rectangular curves; and when both the dynamic permeability and the specific liquid productivity index of this single layer are greater than the dynamic permeability and the specific liquid productivity index corresponding to the baseline of the rectangular curve, the single layer is determined to be a high permeability streak.

**21.** The apparatus according to claim 14 or 15, wherein the high permeability streak genetic type classification module is specifically used for:
utilizing the petrophysical facies classification of the high permeability reservoir stratum or the single well high permeability streak data from the cored wells, analyzing the types of lithofacies and sedimentary facies in which the high permeability reservoir stratum or high permeability streak is developed by means of a scatter point intersection plot or a frequency histogram; and at the same time, in conjunction with the results of the classification of the sedimentary microfacies and stratigraphic sequences, analyzing the location of the high permeability streaks in the sedimentary facies and stratigraphic sequences.

**22.** The apparatus according to claim 14 or 15, wherein the high permeability streak logging identification module is specifically used for:
taking a single well production logging test section as a sample and taking the single-layer dynamic permeability and the single-layer specific liquid productivity index corresponding to the dynamic standard of the high permeability streak as boundaries, analyzing the logging response characteristics of the high permeability streak and non-high permeability streak, and establishing a qualitative identification mode in logging facies for high permeability streak and a quantitative identification mode in conventional logging for sedimentary high permeability streak.

**23.** The apparatus according to claim 22, wherein high permeability streak logging identification module comprises an establishing unit of the qualitative identification mode in logging facies for high permeability streak, which is used for:
analyzing the difference between the high permeability streak and the non-high permeability streak in term of the conventional logging curve, the FMI image logging, and the nuclear magnetic logging T2 spectrum, and establishing the qualitative identification mode in logging facies for high permeability streaks in the sedimentary reservoir stratum and the karst reservoir stratum, respectively, based on the results obtained from the analysis.

**24.** The apparatus according to claim 22, wherein the high permeability streak logging identification module comprises an establishing unit of quantitative identification mode in conventional logging for sedimentary high permeability streak, which is used for:
in the production logging test section, according to the principle of superior fluid flow channel, subtracting obvious non-permeable baffles and barrires and low-permeability reservoir stratums, obtaining logging curve values according to conventional logging curve sampling interval; producing a scatter point intersection plot of double logging curve classification according to the dynamic permeability distribution interval; and analyzing the distribution pattern of the logging curve values and identification limits of the high permeability streaks in conjunction with the geological regularities, thereby establishing a quantitative identification mode in conventional logging for sedimentary high permeability streak.

25. The apparatus according to claim 24, wherein the high permeability streak logging identification module further comprises a curve value calculation unit of the pore structure index curve, which is used for:

when the logging curve includes a pore structure index curve, a curve value of the pore structure index curve is calculated in accordance with the following Equation (7):

$$Am = \frac{\log(Rw) - \log(Rt) - n \times \log(Sw)}{\log(POR)} \qquad \text{Equation (7);}$$

in Equation (7), $R_w$ is the formation water resistivity in ohm·m; $R_t$ is the undisturbed formation resistivity which is corresponding to the deep resistivity curve on the logging curve, in ohm·m; $POR$ is the reservoir stratum porosity in unfactored decimal degrees; Sw is the formation water saturation in unfactored decimal degrees; and n is the saturation index in unfactored decimal degrees.

26. The apparatus according to any one of claims 14-25, wherein the apparatus further comprises an identification result checking module for utilizing the results of core experiments of the cored wells, the production logging information and the dynamic permeability data, as well as the water breakthrough layer of the water breakthrough well in the injection-production well group and the development of high permeability streaks in the water breakthrough layer, to validate the identification results of high permeability streaks in a marine carbonate rock bioclastic limestone oil reservoir.

27. A computer apparatus comprising a memory, a processor and a computer program stored on the memory and runnable on the processor, wherein the processor when executing the computer program realizes the steps of the above-described method for identifying high permeability streaks in a marine carbonate rock bioclastic limestone oil reservoir according to any one of claims 1 to 13.

28. A computer readable storage medium having a computer program stored thereon, wherein the computer program when being executed by the processor realizes the steps of the above-described method for identifying high permeability streaks in a marine carbonate rock bioclastic limestone oil reservoir according to any one of claims 1 to 13.

| determining a single-layer dynamic permeability and a single-layer specific liquid productivity index of a single-well flow unit based on well test information and production logging information; | S101 |

| analyzing the interlayer interference in the multi-layer commingled production based on the production logging information, establishing a high permeability streak dynamic standard by integrating the single-layer yield in the production logging information and the single-layer dynamic permeability and the single-layer specific liquid productivity index of the single-well flow unit, and picking the high permeability streaks in a single well; | S102 |

| classifying the genetic types of the high permeability reservoir stratum in the cored wells based on the results obtained from the study of stratigraphic sequences, lithofacies, sedimentary facies and petrophysical facies, and determining the distribution pattern of the high permeability streaks in the lithofacies, the sedimentary facies and the stratigraphic interface; | S103 |

| establishing a high permeability streak logging identification mode, identifying high permeability streak on an oil reservoir-wide basis well by well according to the high permeability streak logging identification mode, and realizing oil reservoir-wide logging interpretation. | S104 |

FIG.1

FIG.2

FIG.3

$$\log(t_p + dt) - \log(dt)$$

FIG.4

FIG.5

FIG.6

FIG.7

| FORMATION | DEPTH METRES | TVDSS METRES | GR & RHOB | Rt & GR | LITH | FACIES | HFS |
|---|---|---|---|---|---|---|---|

FIG.8

FIG.9

FIG.10a

FIG.10b

Well A, tidal channel-type

FIG.11a

Well B, bioclastic shoal-type

FIG.11b

Well C, shoal flank-type

FIG.11c

FIG.12a

FIG.12b

FIG.13a

FIG.13b

FIG.14

FIG.15a

FIG.15b

FIG.16a

FIG.16b

FIG.16c

79

FIG.17a

FIG.17b

Facies diagrammatic representation

| | | | |
|---|---|---|---|
| SUBTIDAL | subtidal zone | | |
| LAGOON / FLANK | lagoon / shoal flank | | |
| CHANNEL | tidal channel | | |
| SHOAL | bioclastic shoal | | |

FIG.17c

reservoir stratum dynamic parameter determination module — 101

↓

high permeability streak picking module — 102

↓

high permeability streak genetic type classification module — 103

↓

high permeability streak logging identification module — 104

FIG.18

reservoir stratum dynamic parameter determination module ⌐ 101

↓

high permeability streak picking module ⌐102

↓

high permeability streak genetic type classification module ⌐103

↓

high permeability streak logging identification module ⌐104

↓

identification result checking module ⌐105

FIG.19

<div style="text-align:center">**INTERNATIONAL SEARCH REPORT**</div>

| International application No. |
| --- |
| **PCT/CN2022/070683** |

| A. | CLASSIFICATION OF SUBJECT MATTER |
| --- | --- |
| | E21B 49/00(2006.01)i |

According to International Patent Classification (IPC) or to both national classification and IPC

| B. | FIELDS SEARCHED |
| --- | --- |

Minimum documentation searched (classification system followed by classification symbols)

   E21B

Documentation searched other than minimum documentation to the extent that such documents are included in the fields searched

Electronic data base consulted during the international search (name of data base and, where practicable, search terms used)

   CNABS; CNTXT; CNKI; VEN; USTXT; WOTXT; EPTXT: 海相碳酸盐岩生屑灰岩, 油藏, 高渗, 条带, 识别, 试井, 测井, 单井流动, 单层, 渗透率, 比采液指数, 取芯, 沉积, drill+, reservoir, dynamic, oil well, target, monitor+, test+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 112818501 A (CHINA NATIONAL PETROLEUM CORP.) 18 May 2021 (2021-05-18) description, paragraphs [0078]-[0120], and figures 1-8 | 1-28 |
| A | CN 108319743 A (CHINA NATIONAL PETROLEUM CORP.) 24 July 2018 (2018-07-24) entire document | 1-28 |
| A | CN 110863814 A (CHINA NATIONAL PETROLEUM CORP.) 06 March 2020 (2020-03-06) entire document | 1-28 |
| A | US 2018327651 A1 (UNIVERSITY OF WYOMING) 15 November 2018 (2018-11-15) entire document | 1-28 |

☐ Further documents are listed in the continuation of Box C.  ☑ See patent family annex.

| * | Special categories of cited documents: | | "T" | later document published after the international filing date or priority date and not in conflict with the application but cited to understand the principle or theory underlying the invention |
| --- | --- | --- | --- | --- |
| "A" | document defining the general state of the art which is not considered to be of particular relevance | | | |
| "E" | earlier application or patent but published on or after the international filing date | | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
| --- | --- |
| **19 March 2022** | **29 March 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/070683**

| Patent document cited in search report | | | Publication date (day/month/year) | Patent family member(s) | | | Publication date (day/month/year) |
|---|---|---|---|---|---|---|---|
| CN | 112818501 | A | 18 May 2021 | None | | | |
| CN | 108319743 | A | 24 July 2018 | None | | | |
| CN | 110863814 | A | 06 March 2020 | None | | | |
| US | 2018327651 | A1 | 15 November 2018 | US | 2019062618 | A1 | 28 February 2019 |
| | | | | US | 10995260 | B2 | 04 May 2021 |
| | | | | US | 10144864 | B1 | 04 December 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106121641 A
- CN 108535161 A
- CN 110821485 A
- CN 110821486 A